# EUROPEAN PATENT SPECIFICATION

(11) **EP 4 334 087 B1**
(45) Date of publication and mention of the grant of the patent: **20.11.2024**
(21) Application number: 22728199.5
(22) Date of filing: 09.05.2022
(51) Int. Cl.: B25J 9/00, B25J 3/02

(54) **SCALABLE AND UNPOWERED SUPPORT DEVICE USING FORCE REGULATORS**
SKALIERBARE UND ANTRIEBSLOSE STÜTZVORRICHTUNG MIT KRAFTREGLERN
DISPOSITIF DE SOUTIEN ÉVOLUTIF ET NON MOTORISÉ UTILISANT DES RÉGULATEURS DE FORCE

(30) Priority: 07.05.2021 BE 202105376
(43) Date of publication of application: 13.03.2024
(73) Proprietor: Jeurgen, Niels, 3530 Houthalen (BE)
(72) Inventor: Jeurgen, Niels, 3530 Houthalen (BE)
(74) Representative: Arnold & Siedsma
(86) International application number: PCT/EP2022/062434
(87) International publication number: WO 2022/234141

(56) References cited:
- US-A1- 2014 257 091
- US-A1- 2021 060 762
- NIELS JEURGEN - QUENTIN DE CLERCQ: "Humanix Movie", 17 May 2020 (2020-05-17), XP055895474, Retrieved from the Internet <URL:https://www.youtube.com/watch?v=OEwB-T2uqM0> [retrieved on 20220225]
- GAN ZHENYU ET AL: "Modeling and Experimental Evaluation of a Variable Hydraulic Transmission", IEEE/ASME TRANSACTIONS ON MECHATRONICS, IEEE SERVICE CENTER, PISCATAWAY, NJ, US, vol. 25, no. 2, 3 January 2020 (2020-01-03), pages 750 - 761, XP011784689, ISSN: 1083-4435, [retrieved on 20200421], DOI: 10.1109/TMECH.2019.2963880

## Description

### FIELD

The present invention concerns the field of support devices for humans and industrial manipulators. In particular the field of wearable exoskeletons that support human wearers by compensating the weight of their limbs, torso or a carried payload, or the field of industrial manipulators that support a payload or allow an operator to move the manipulator, again possibly while carrying a payload.

### BACKGROUND

For these applications there is a need to apply compensation forces on the human through a supportive structure, or to apply forces on a payload or a payload carrying support device. These forces can be applied using external systems like overhead cranes or hoists, which are cumbersome, and it is not always possible to reach the target object when the human or the payload moves. Wearable exoskeletons can alternatively provide forces on the human through the exoskeleton that have the same effect as if the forces would be provided externally through a hoist, even though the forces are instead applied between links in the exoskeleton and eventually the exoskeleton base which is supported by a wearable harness. Similarly, industrial manipulators apply forces directly between the links of the robotic manipulator and eventually to the robotic base, making the robot support itself as if it was weightless, yet without applying external forces from a hoist, and enabling additionally to apply extra forces between the links to support a payload.

For both exoskeletons and industrial manipulators unpowered, and powered devices are described, as well as hybrid combinations of unpowered devices with some powered components. The unpowered devices have the advantage of substantially lower manufacturing costs and improved user experience through lower heat emissions, lower maintenance efforts, and a higher level of autonomy. The powered devices have the advantage of higher flexibility, often being digitally controllable, allowing to define various types of compensation forces and adjusting to various configurations. The hybrid devices utilize many unpowered parts similar to the unpowered devices, but additionally include powered components like an electronic controller, one or more sensors and one or more shifting actuators to regulate and adapt compensation force in correlation with the desired force. If these devices still strongly rely on the unpowered components, many of the benefits of the unpowered devices are maintained, while the additional electronic components add flexibility and the possibility to program complex desired behaviors. Both powered and hybrid devices do still rely on external power sources. To make already existing or new manipulators more compact, more energy efficient and more cost efficient the present invention focuses on the unpowered and hybrid solutions.

### CONTRIBUTION

The present invention proposes unpowered and hybrid devices that are, compared to existing solutions, more compact, more flexible, more easy to scale to more degrees of freedom, and better able to apply compensation forces that take into account the specific positions of the entire support device, such as taking into account the position of the lower arm when applying force to support the upper arm in a wearable exoskeleton to render the wearer's arm weightless, and without having the wearer feel the weight of the components supplying the compensation forces. Powered systems with similar characteristics exist, but since these are powered, they are and expensive to manufacture, and have a reduced user experience due to the need for maintenance, the weight and bulk, the heat produced and the lower level of autonomy. The present invention proposes such devices for usage in wearable exoskeletons, and for usage as industrial manipulators.

### PRIOR ART

US2018361565A1 to Ekso Bionics describes an unpowered arm support assembly that provides assistive torque to the arm of a human wearer through a gas spring and cam follower assembly. The arm support assembly is configured to pivot about the horizontal axis, the sagittal axis and the coronal axis. However, this device does not provide any support for the forearm and is not able to adapt compensation forces in correlation to the individual position of upper, fore-arm and base to the ground plane.

The compensation force on the upper arm is chosen to compensate for the position of the lower arm in a single position, but since the lower arm can move freely it does not in all possible positions fully compensate for its impact. Therefore, there is a general need to provide support devices that allow motion but maintain weight compensation of the whole arm depending on the specific orientation of this upper, forearm and base

US6899308B2 to Agency for Science Technology and Research Singapore

EP3216417A1 to Hanyang University Industry-University Cooperation Foundation (IUCF) ,Koh Young Technology Inc.

Both patents describe an unpowered Multi Degrees of freedom counterbalance and spring balanced mechanism. These mechanisms have two active degrees of freedom connected in a serial way, to which an end effector can be installed that can be moved to a desired position. The mechanisms are compensated through dedicated springs or counterweight, with a minimum of one for each active degree of freedom, and allow motion in the horizontal plane. However, these devices do not provide a solution for more degrees of freedom, specifically more than three compensated parallel inter dependent or serial compensated degrees of freedom working in two different planes other than a plane which is parallel to the horizontal plane. These devices have the need for dedicated spring or counterbalance parts in combination with dedicated cam and bar linkages for each compensated degree of freedom in correlation with on dedicated end effector or payload. Therefore, there is a general need to provide a method for unpowered, hybrid powered compensation manipulators that have the ability to compensate in multiple degrees of freedom, specifically more than three but not limited to that, with no limitations on how these degrees of freedom interact. The devices described in the aforementioned patents also do not have a method to take into account payloads with variable weights and locations of their center of gravity, so there is also a general need for support devices with an tunable load and center of gravity location setpoint, preferably without the need of exchanging and or redesigning components.

US 2021/060762 A1 discloses a force regulator assembly according to the preamble of the appended independent claim 1.

### SHORT DESCRIPTION OF THE INVENTION

It is an object of the present invention to reduce at least one of the disadvantages mentioned above. This object is achieved with a force regulator assembly as defined by the appended claims, comprising a main assembly, which forms the part of the exoskeleton that directly supports the human or the main part of the robotic manipulator that moves its end-effector between different positions, which is connected to an assistive assembly that is a representation of the main assembly, located outside of the main assembly and possible in a scaled format. The invention discusses a connection between the main and assistive assemblies in at least two actuated degrees of freedom to achieve this representation, so that displacements and forces in the main assembly result in displacements and forces in the assistive assembly. The invention relies upon this so that force regulator units can be used to apply compensation forces in the assistive assembly yet perform useful supportive actions in the main assembly, while the weight of these force regulator assemblies is not felt by the main assemblies, and at the same time to ensure that the positions of the actuated degrees of freedom in the main assembly have an impact on the forces experienced by the other actuated degrees of freedom, so that when for example the lower arm moves of a person wearing an exoskeleton, a part of the main assembly moves along with it and so does a link in the assistive assembly, ensuring that the compensation forces felt on the main assembly for the upper arm will be applied taking into account the lower arm displacement.

According to the invention, there is a switch to alter the force applied by the force regulator units and/or the force transmission unit or its interface point to the assistive assembly. This can be a toggle to enable load or no load mode, allowing an operator or person wearing the device to easily move the device without experiencing assistive forces when the no load position is selected, while being able to activate the assistive forces when needed.

Relying on these components the invention provides an efficient, user-friendly and convenient way to apply desired forces on a target object, such as a part of the human body like a limb, or a robotic manipulator. The same support device and underlying methods can also be used for other applications where applying assistive forces is useful.

Accordingly, a first aspect of the invention is a support device, comprising
a. a main assembly including
   a. a base support
   b. a minimum of one or two links rotably connected to the base support, able to move in at least two actuated degrees of freedom,
   c. optionally a means to support a human wearer of an exoskeleton, connected to the main assembly links on one side, and providing a means to support and connect to the wearer on the other,
   d. optionally, an end-effector or an interface to an end-effector or gripper to pick up a payload or a tool for a robotic manipulator,
   e. a means to apply forces on the links in the actuated degrees of freedom, realized with unpowered actuators that apply forces on the links with respect to the base support, or in between links, or realized through mechanical connections between the main and assistive assemblies.
b. an assistive assembly, placed separately and outside of the main assembly, including
   a. a base assistive support,
   b. a minimum of one or two links rotably connected to the assistive base support and arranged to represent the movements of the corresponding links in the main assembly,
   c. a minimum of one force regulator unit, having a first and a second end, with the first end connected to the assistive base support, and the second end to the assistive links through an interface point. This force regulator unit contains an energy story unit and a force transmission unit, wherein the energy storage unit stores and releases energy by causing displacements and applying forces, and the force transmission unit being used to transfer these forces and displacements between the energy storage unit and the interface point,
   d. a means to apply forces on the links in the actuated degrees of freedom, realized with unpowered actuators that apply forces on the links with respect to the assistive base support, or in between links, or realized through mechanical connections between the main and assistive assemblies.
c. An unpowered connection between the main and assistive assemblies, included so the assistive assembly is an effective representation of the main assembly in the at least two actuated degrees of freedom, and to maintain this representation even when one or both of the assemblies move or experience forces
   a. achieved by connecting the actuated degrees of freedom in the main and assistive assemblies, as a result of connecting the corresponding actuators in the main and assistive assemblies for each actuated degree of freedom, or as a result of mechanically connecting the links in the main and assistive assemblies for each actuated degree of freedom.
   b. so that forces and displacements in the main assembly result in forces and displacements in the assistive assembly and the other way around,
   c. so that when the at least one or two links in the main assembly move the one or two links in the assistive assembly moves as well, and owing to the representation the position of the at least one or two links in the main assembly directly follow from those of the at least one or two links in the assistive assembly, and the other way around,
   d. wherein the forces experienced by the at least one or two links in the main assembly in one degree of freedom are a function of the position of the at least one or two links in the other degree of freedoms, and the other way around, in a predetermined manner. Through the connection this allows to apply compensation forces to the assistive assembly and thus to the main assembly, and these forces are a function of the positions of the links in the main assembly.

In another embodiment, the assistive assembly is a scaled representation of the main assembly, optionally folded in such a way as to provide easy access for force regulator assemblies.

In another preferred embodiment, the assistive assembly includes a smaller scale representation of the main assembly. In this embodiment, the assistive assembly is arranged such that the bidirectional movements of the main assembly and of the assistive assembly are essentially synchronized. Bidirectional movements include position, force and motion.

In another embodiment of the invention, the assistive links and the intermediate distance between al degrees of freedom of assistive assembly are between half the size and a tenth of the size of the links and the intermediate distance between al degrees of freedom of main assembly.

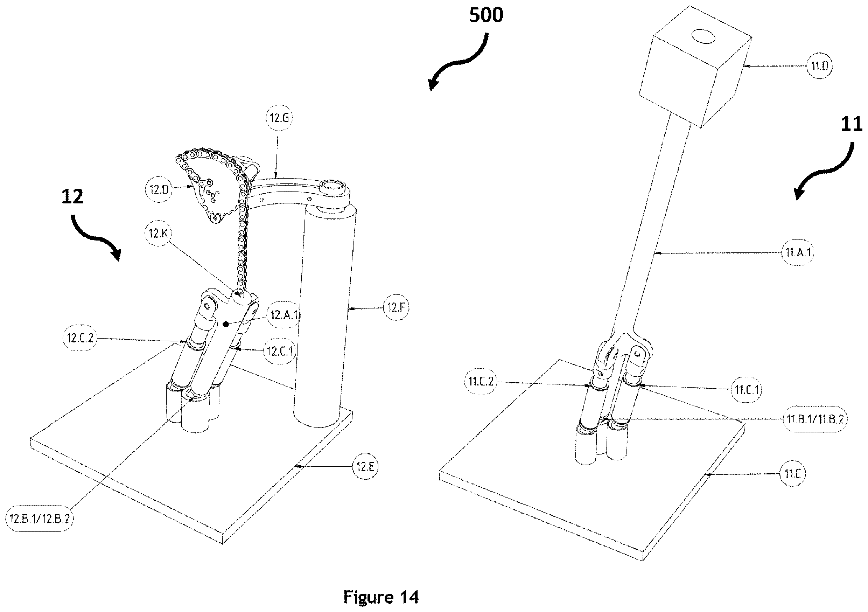

In one embodiment (multi motion configuration, Figure 14) there is a single link in the main assembly rotatably connected to the base support and arranged to support the movements of the first mass of a target, and/or transfer forces coming from one or multiple masses of a target(s) to a first actuator and the base support. For this single link there is a second rotatable connection between the first link and the base support to support the movements of one or multiple masses of a target in a motion path different from the achieved motion freedom coming from the first rotatable connection between the base support and a first link. The assistive assembly similarly has a first assistive link rotatably connected to the assistive base support and arranged to represent the movements of the corresponding first link in the main assembly, and or transfer forces coming from one or multiple force regulator units to a first assistive actuator and the assistive base support. This assistive link has a second rotatable connection between the first assistive link and the assistive base support arranged to represent the movements in a second degree of freedom of the corresponding first link in the main assembly, and or transfer forces coming from one or multiple force regulator units to a first assistive actuator and the assistive base support.

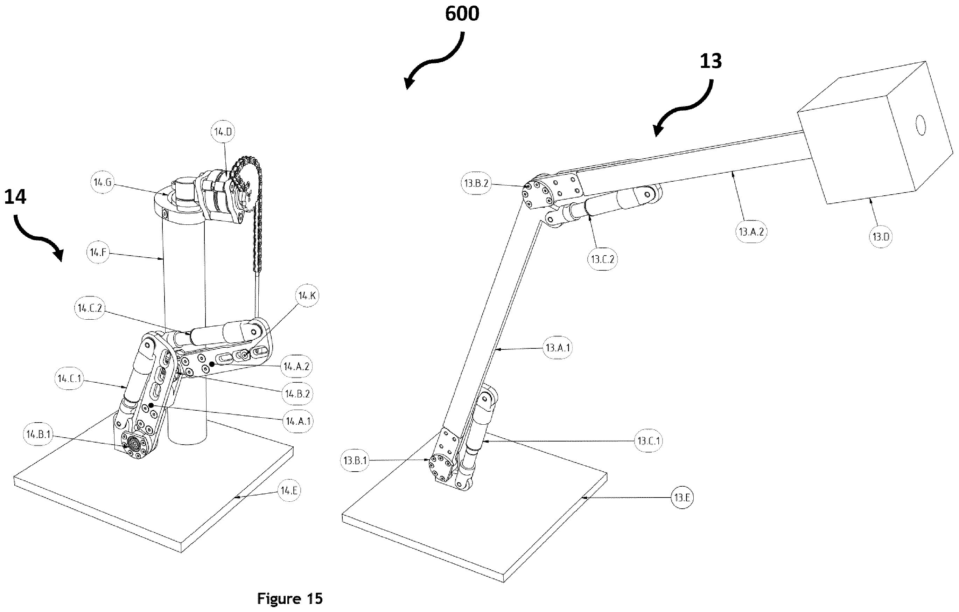

In another embodiment (serial configuration, Figure 15) there are two links in the main assembly. A first link is rotatably connected to the base support and arranged to support the movements of the first mass of a target, and or transfer forces coming from one or multiple masses of a target(s) to a first actuator and the base support. A second link is rotatably connected to the first link and arranged to support the movements of the first mass of a target, and or transfer forces coming from one or multiple masses of a target(s) to a second actuator and the first link. The assistive assembly similarly has a first assistive link rotatably connected to the assistive base support and arranged to represent the movements of the corresponding first link in the main assembly, and or transfer forces coming from one or multiple force regulator units to a first assistive actuator and the assistive base support. A second assistive link is rotatably connected to the first assistive link and arranged to represent the movements of the corresponding second link in the main assembly, and or transfer forces coming from one or multiple force regulator units to a second assistive actuator and the first assistive link.

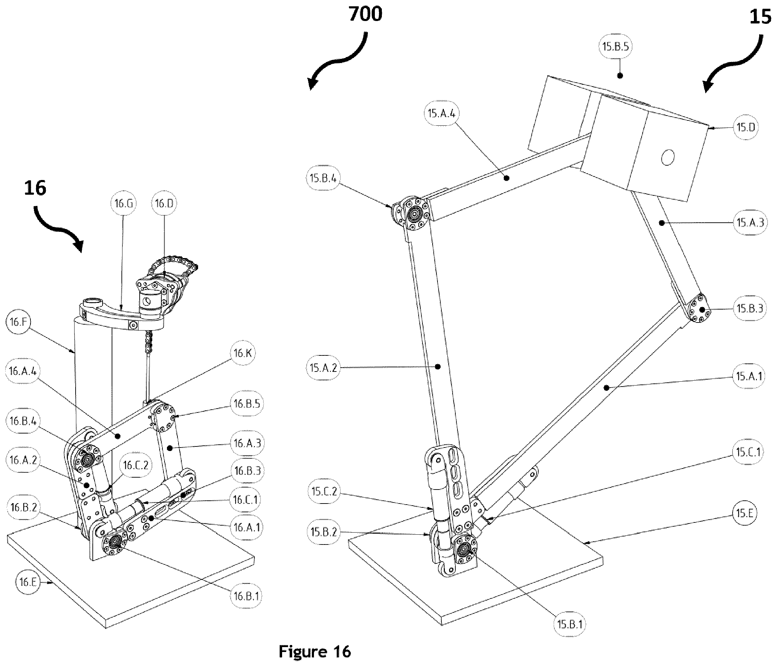

In another embodiment (parallel configuration, Figure 16) a first link rotatably connected in the main assembly to the base support and arranged to support the movements of the first mass of a target, and or transfer forces coming from one or multiple masses of a target(s) to a first actuator and the base support. There is also a second link having a first and second end, the first end being rotatably connected to the base support end and the second end being indirect connected to the second end of the first link, through a third and fourth interdependent link and arranged to support the movements of the first mass of a target, and or transfer forces coming from one or multiple masses of a target(s) to a first and second actuator and the base support. The assistive assembly similarly has a first assistive link rotatably connected to the assistive base support and arranged to represent the movements of the corresponding first link in the main assembly, and or transfer forces coming from one or multiple force regulator units to a first assistive actuator and the assistive base support. A second assistive link has a first and second end, the first end being rotatably connected to the assistive base support end and the second end being indirect connected to the second end of the first assistive link, through a third and fourth interdependent assistive link and arranged represent the movements of the corresponding second, third and fourth link in the main assembly, and or transfer forces coming from one or multiple force regulator units to a second assistive actuator and the assistive base support.

In another embodiment the main and assistive assemblies can have one or more links in two or more actuated degrees of freedom, connected through unpowered mechanical connections optionally relying on unpowered actuators, so that the assistive assembly forms a representation of the main assembly, and wherein the assistive assembly can have one or force regulator units that apply forces on the assistive links through interface points. These can be built using combinations of the previous three basic principles (multi-motion configuration, serial configuration, parallel configuration).

In an embodiment the main assembly can have additional passive, non-actuated degrees of freedom, such as a rotation of the base support in the horizontal plane, which are not included in the assistive assembly, so these degrees of freedom are not connected to the links in the assistive assembly.

In another aspect of the invention the assistive assembly is located outside of the main assembly in the form of a separatable assembly, such that no connection from the assistive assembly to main assembly is in place other than the connection established to transfer force and position between assistive and main assemblies. As a result the force resulting from the weight of this assistive device and specifically the force regulator units used to apply compensation forces, is not transferred the main assembly.

In another aspect of the invention, the position of one actuated degree of freedom has influence on delivered output force of the other actuated degrees of freedom as well as the delivered output force felt in the degree of freedom itself. As such the device provides an efficient, user-friendly and convenient way to regulate the desired force acting on the targeted mass(es)/payload or limb. This can for example be used to apply a force on the upper arm of a wearable exoskeleton to compensate the weight of the arm of the wearer, and to ensure the compensation force while doing so takes into account the specific position of the forearm.

In another embodiment of the invention, the forces applied by the force regulator units are a function of the positions of the links in the assistive assembly and through the connection thus also of the positions of the main assembly. This allows to flexibly define the desired compensation forces depending on the positions, for various applications.

In another embodiment of the invention, the force regulator unit is connected to the assistive base support through a planar degree of freedom such that the first regulator unit can follow the motion of the interface point with the assistive link. Configured to store, release and direct energy and force in an axis perpendicular to this planar degree of freedom between assistive base and the first force regulator assembly independent of the interface point position. Depending on the selected motion freedom this connection between the force regulator assembly end the assistive base support can be limited to one degree of freedom.

In another aspect of the invention, there is a need for one force regulator unit per mass of a target, independent on the amount degrees of freedom, actuators or linkages.

In another aspect of the invention, there is a need for only one force regulator per mass of a target, for a support device with at least three actuated degrees of freedom. As an example the invention would make it possible to use a single force regulator unit for a 5 degrees of freedom support device that carries a single payload.

In another aspect of the invention, the force position and position communication between assistive and main assembly are combined.

In another embodiment of the invention, the force and position communication between main and assistive assembly is done through a flexible connection, such that the location and orientation of assistive and main assembly in correlation to each other can vary in a flexible way.

The means to connect the main and assistive assemblies can any force transmission systems. For example, hydraulic cylinders, torsion cables, pulley systems, gears, shafts, friction or elastic couplings or bar linkages. A hydraulic cylinder is a mechanical actuator that is used to give a bidirectional force through a bidirectional stroke. In a further preferred embodiment, the hydraulic cylinders are connected back to back connected through flexible tubes in a closed circuit such no external energy is required except the mechanical energy through the assistive force provided by the force regulator assembly.

In another embodiment of the invention, the unpowered actuators are selected from the group consisting of hydraulic cylinders, torsion cables or pulley systems or combinations thereof.

In another embodiment of the invention, the flexible connection can be achieved using a closed circuit of hydraulic actuators serving as main and assistive actuators, and the connection between the main and assistive assemblies is achieved by connecting the hydraulic actuators using flexible hydraulic lines. In that layout the main actuators can be connected using a closed system of hydraulic lines to the assistive actuators, each time connecting one main actuator to one assistive actuator, so that a displacement in the main actuator leads to a proportional displacement in the assistive actuator, and the other way around, and similarly a force in the main actuator leads to a proportional force in the assistive actuator.

In another embodiment of the invention, the force and position communication between assistive and main assemblies is done through a stiff connection.

In another embodiment of the invention, the force and position communication between assistive and main assemblies is done through one or more stiff connections pivoting around one mutual rotation point.

In another embodiment of the invention, the means to stiffly connect main and assistive assemblies is selected from the group consisting of rotation shafts, linkages, gears, pulleys and belt or combinations thereof.

The energy storage units contained within the force regulator units may be any suitably sized units to releasably store energy. Preferably, the energy storage unit is an elastic energy storage unit. Examples of elastic compensation actuator include springs, such as clock springs and blade springs. Such springs are commonly referred to as mechanical batteries for their ability to releasably store energy. However, also other elastic elements are suitable, for example elastic foams and air springs.

In another embodiment of the invention, the energy storage unit is selected from the group consisting of metal springs, counterweights, clock spring, a blade spring, a gas spring, an elastically deformable foam or a combination thereof.

In another embodiment of the invention, the energy storage unit is a combination of clock springs, servo shift and a gearbox.

In another embodiment of the invention, the energy storage unit is a combination of pneumatic cylinder, air tanks and a pressure regulator

In another embodiment of the invention, the force transmission unit is a toothed cam chain assembly, cam linkage assembly, ball joint and any other mechanical assembly or part that transfers and directs force coming from the force regulator assembly to the foreseen interface point on the assistive links.

In another embodiment of the invention, the device is free of powered electric, hydraulic, or pneumatic actuators configured to generate the assistive force.

In one embodiment of the invention, the support device is unpowered in the sense that no external energy is necessary to provide the assistive force, in particular no electric energy is required. Though additional powering is possible, the support device preferably is unpowered.

In another embodiment of the invention, the device does not comprise a sensor configured to sense a motion and or position of the links in the assistive assembly relative to the assistive base support plane, nor an electronic controller to process this sensor.

In another embodiment of the invention, the device is has additional powered electric, hydraulic, or pneumatic actuators configured to generate additional assistive force or to adjust the force transmission unit to affect the force resulting from unpowered force regulator units.

In another embodiment of the invention, the device does comprise a sensor configured to sense a motion and or position of the links in the assistive assembly relative to the assistive base support plane, such the controller detects a balance between applied load and assistive force.

In another embodiment of the invention, the device is powered in a hybrid way by a combination of electric, hydraulic, or pneumatic actuators in combination with the group consisting of metal springs, clock spring, a blade spring, a gas spring, an elastically deformable foam or a combination thereof.

In another embodiment of the invention, both location of the interface point and the applied assistive force can be adjusted such that the compensation force perceived by the main assembly can be placed in the theoretical center of gravity of a payload with the desired amplitude. Depending on the end application the tunable embodiment of this force regulator assembly can be replaced by a dedicated non tunable version, such that there is a cost and weight optimization.

In another embodiment of the invention, both location of the interface point and applied assistive force are tunable through a powered actuator.

In another embodiment of the invention, the device has an auto load detect function. This function relies on a support device equipped with electronics and sensors and it executes a force ramp up till a force balance is found between assistive force and force coming from the load connected to links of the main structure. The ramp up is controlled by the embedded algorithm in the controller, and once the balance is found the payload and the force needed to compensate for it are known for future reuse.

The support device of the present invention may be applied wherever gravity exists.

In another embodiment of the invention, the applied assistive force is constant, such that it is independent of the traveled stroke, position in the direction of the axis perpendicular to the planer degree of freedom between assistive base and this force regulator. This way compensation of gravity forces can be realized.

In another embodiment of the invention, the device is a wearable device.

In another embodiment of the invention, the device is a wearable exoskeleton.

In another embodiment of the invention, the torso support is a wearable harness.

In another embodiment of the invention, the device is a wearable exoskeleton that' assists the wearer to compensate for the gravity experienced due to his or her body parts.

In another embodiment of the invention, the device is a wearable exoskeleton that' assists the wearer to compensate for the gravity experienced due to his or her body parts as well as a carried payload.

Another object of the invention is the use of the support device as a wearable gravity compensation device for medical assistive systems, muscular damage control, vibration control, rehabilitation, muscle training in order to support the whole human arm, leg or any other moving member of the human.

In this embodiment, the wearable support device will act in the center of gravity resulting in a multiplication of the gravitational force. This effect may also be helpful in muscle training or rehabilitation after injury

In another embodiment of the invention, the wearable support device provides assistive force to the whole arm of the user by counteracting gravity. However, the present device may also be configured to provide assistive force to any linkage that movably connects two parts, for example mechanical joints or human joints. Examples of further human joints are the leg, knee or the hip.

In another embodiment, the support device is used for protective purposes. For example, the support device may reduce the risk of muscular injuries during the lifting of heavy objects. However, the support device may also be configured to reinforce the weight of such a part for example for training purposes.

In another embodiment of the invention, the device is an exoskeleton to assist the motions of the human arm configured to assist the human arm to pivot in both a sagittal, coronal or transverse plane.

In another embodiment of the invention, the device comprises a torso support and a first support device configured to support the right arm and a second support device configured to support the left arm.

In another embodiment, the wearable support device may be used to simulate the gravitational force on earth. This is useful in space applications to avoid degradations of muscles and bones due to the absence of gravity.

In another embodiment, the wearable support device may be used to eliminate high and low frequency vibrations in movements. Furthermore, the support device may be used to reduce or control muscles vibrations, for example in patients suffering from Parkinson disease. For example by lowering the required force in correlation to motion and or position of the arm in combination with friction dampening behavior of the device, the oscillation amplitude will be lowered.

In another embodiment of the invention, the device is device is a prothesis replacing a part or a complete limb of the wearer.

In another embodiment of the invention, the device is a stand-alone manipulator.

In another embodiment of the invention, the device is an manipulator that compensates its own weight at any orientation and location, as well as that of a connected mass/payload.

In another preferred embodiment of the invention, the manipulator support device provides assistive force to one or multiple masses in the form of a payload by counteracting gravity, in particular to compensate gravitational forces acting on one or multiple payloads in different positions, orientations and or while manipulating. However, the support device may also be configured to reinforce or redirect the weight of this payload such it has a preferred position in the special position and orientation for example assembly purposes.

In another embodiment of the invention, the device is a robotic manipulator compensating for its own weight, allowing a human operator to flexibly move the robotic manipulator with little effort. Though the reduction of the weight can be the goal, it is also possible to apply additional forces to for example increase stiffness in one direction to achieve compliance control and to limit motions in dangerous or unwanted directions.

In another embodiment, the manipulator support device will act in the center of gravity resulting in a multiplication of gravitational force acting on a payload. This effect may also be helpful for energy efficient and fully or partly submerging floating body's in a liquid.

In another embodiment of the invention, the device is a parallel weight compensator with three or more actuated degrees of freedom and additional passive, non-actuated degrees of freedom.

In another embodiment of the invention, the device is a serial weight compensator with three or more actuated degrees of freedom and additional passive, non-actuated degrees of freedom.

In another embodiment of the invention, the device further comprises a carrier support configured to be coupled to a movable carrier/ platform.

Another object of the invention is the use of the support device to support the movement of the arm of a robot or a crane in industrial applications.

The present invention is also useful in reversing the force direction. In this embodiment, the smaller scale duplicate assistive assembly regulates the force in a way that the force acting on a body or payload mimics the gravitational force acting on the same body or payload in relation to its orientation.

Another object of the invention is a method of providing assistive forces to a target or a main assembly using the support device of the invention, wherein
1. these forces result from forces applied by force regulator units on an assistive assembly, whose weight is not felt by the main assembly,
2. the assistive assembly is a representation of the main assembly in a number of actuated degrees of freedom, and wherein this representation is obtained by a mechanical unpowered connection of the main and assistive assemblies,
3. this representation results in forces and displacements being applied in the assistive assembly also being applied to the main assembly,
4. the force applied or felt by one link has an influence of the position of another link, allowing to design compensation forces to be applied to take into account the position of the different links.

Another aspect of method is that it is possible to apply compensation forces using only a single force regulator unit per object in the main assembly or object held by the main assembly, independent of the number of degrees of freedom, and number of links.

Another aspect of the method is that the support devices can be adjusted for various purposes, with variable configurations, numbers of links, actuated degrees of freedom and force regulator units, and that it can remain purely unpowered or become a hybrid.

In an embodiment of the invention the force regulator assembly has an assistive assembly comprising an assistive base support and one or more assistive links wherein at least one is connected to the base assistive support, arranged to move in at least two degrees of freedom, and arranged so the assistive assembly moves in a manner that is a representation of the main assembly.

In an further embodiment of the invention the force regulator assembly has a mechanical, unpowered connection between the main and assistive assemblies, the assistive assembly being arranged so that this connection results in the assistive assembly being a representation of the main assembly, in that when the link in the main assembly moves the link in the assistive assembly moves as well, and the position of the main assembly directly follows from that of the assistive assembly and the other way around.

Examples of the invention will now be described with references to the figures. Additional objects, features and advantages of the invention will become more readily apparent from the following detailed description of the invention when taken in conjunction with the drawings. The reference numerals refer to the corresponding parts in the drawings. It is noted that these figures are only examples illustrative for the understanding of the invention, and are in no way meant to be limiting to the scope of the invention.

### SHORT DESCRIPTION OF DRAWINGS FOR WEAREBLE EXOSKELETON

Figure 1 is a perspective view of an embodiment of the support device in the form of an exoskeleton for the whole right arm.
Figure 2 is a perspective view of an embodiment of the main assembly of the support device in the form of an exoskeleton for the whole right arm.
Figure 3 is a perspective view of an embodiment of the assistive assembly of the support device in the form of an exoskeleton for the whole right arm.
Figure 4 is another perspective view of an embodiment of the assistive assembly of the support device in the form of an exoskeleton for the whole right arm

### DETAILED DESCRIPTION OF DRAWINGS FOR WEAREBLE EXOSKELETON

The embodiments disclosed herein are merely examples. The figures are not necessarily to scale but they intend to teach the skilled person to carry out the present invention.

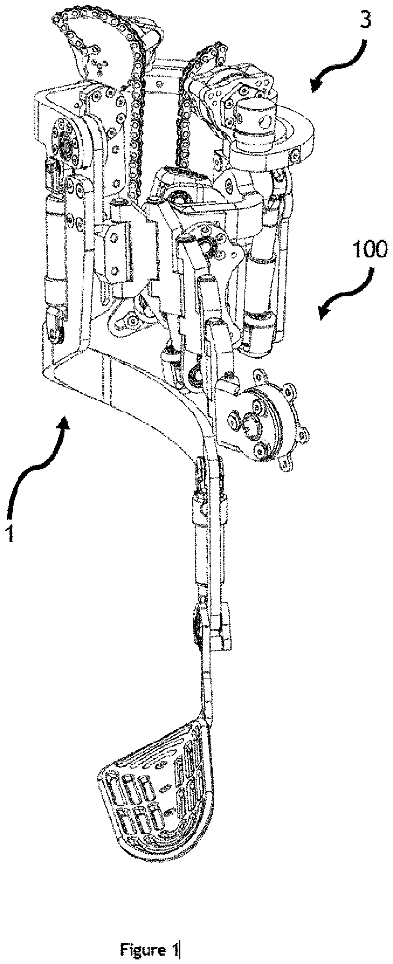

In Figure 1, the support device (100) takes the form of an exoskeleton to assist the whole right arm of a human being thereby enabling the user to perform work and motion whilst fully supported by the support device (100) during the motion and at any static position or orientation. The support device (100) includes a main assembly (1) and an assistive assembly (3). The assistive assembly (3) of Figure 1 is in fluid connection with the main assembly (1). The hydraulic connections between the hydraulic cylinders are not shown in Figure 1 nor any of the Figures but are immediately clear for the skilled person. The hydraulic cylinders are arranged such that if the hydraulic cylinders of the assistive system (3) are actuated, this actuation in the form of position and force is transferred through the fluid connection to the corresponding hydraulic cylinders in the main assembly (1) and the other way around, such if the hydraulic cylinders of the main assembly (1) are actuated, this actuation is transferred to the corresponding cylinders in the assistive assembly (3). In Figure 1, the assistive assembly (3) is a smaller scale representation of the of the main assembly (1) configured to represent the bidirectional movements of the main assembly (1) such that the main assembly (1) and the assistive assembly (3) move in an essentially synchronized way. For example, the assistive assembly (3) can be one half of the size of the main assembly, preferably even smaller, for example one third, one fourth, one fifth or even one tenth of the size of the main assembly (1) as shown in Figure 1. The smaller the size of the assistive assembly (3) is, the better the user experience is.

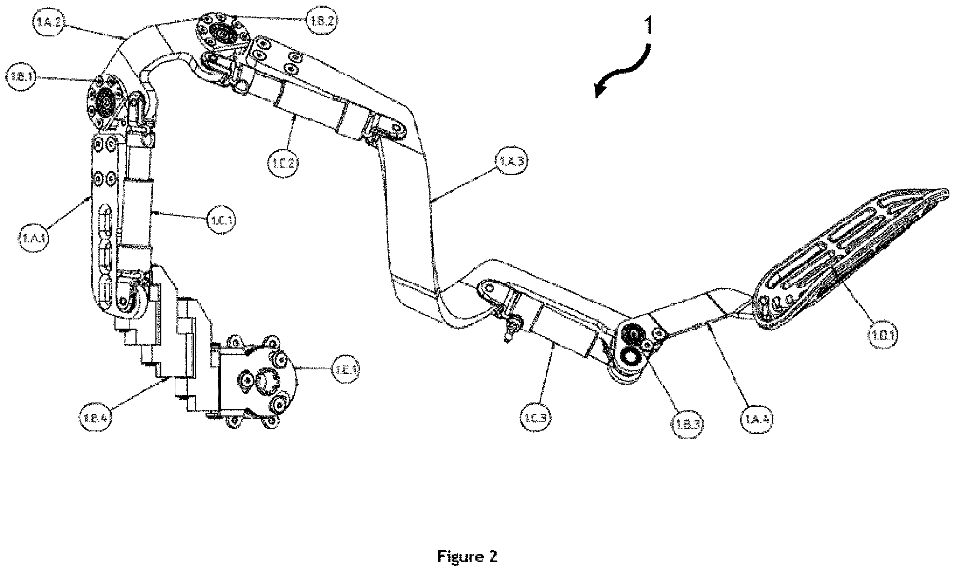

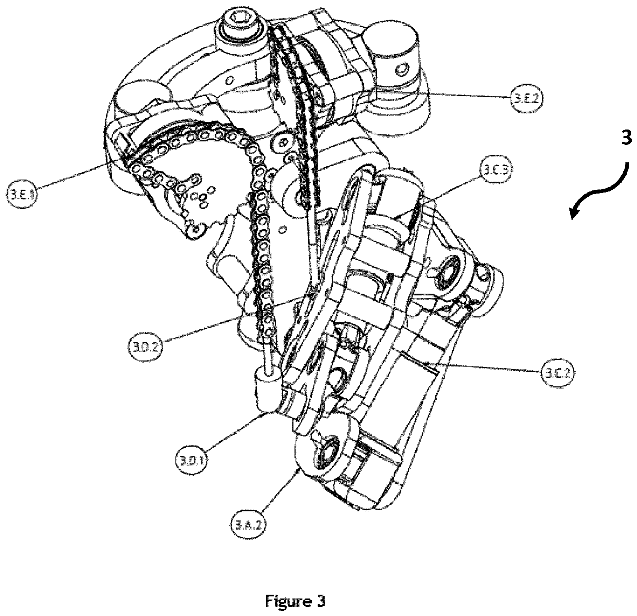

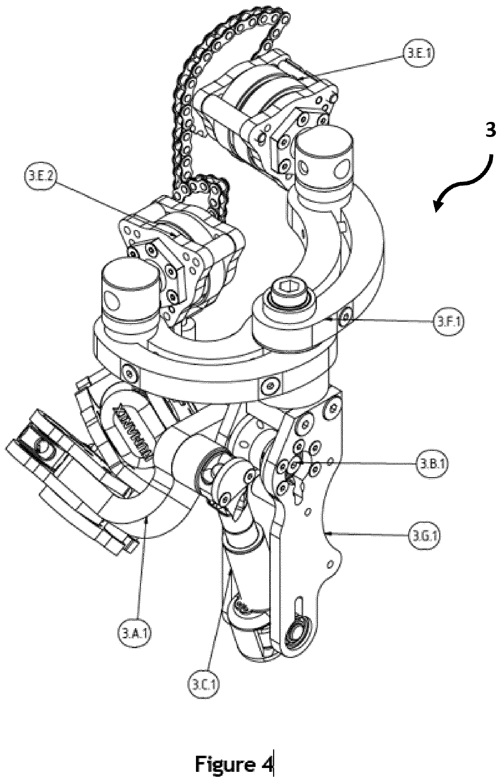

Thus, the support device (100) shown in Figure 1 allows for supporting lateral, forward and backward motions of the arm and of the forearm. A first interface ensures the connection with the arm. In Figure 1, a second interface ensures the connection with a harness which is not shown. A harness is typically reversibly mounted on the torso of the human or a robot or any other target in need of assistive force. The main assembly (1) of Figure 1 is further exemplified in Figure 2. The assistive assembly (3) of Figure 1 is further detailed in Figures 3 and 4.

Figure 2 is a perspective view of the main assembly (1) of the embodiment shown in Figure 1. The main assembly (1) comprises three hydraulic actuators (1.C.1, 1.C.2, 1.C.3) and four links (1.A.1, 1.A.2, 1.A.3, 1.A.4) that represent the first and the second links of the main assembly. The main assembly (1) further comprises four independent degrees of freedom (1.B.1, 1.B.2, 1.B.3, 1.B.4) ensuring the rotatable connection of the first and the second member resulting in a maximum of freedom of movement for the wearer. Motion about the rotation means are generally free.

The lengths of the links (1.A.1, 1.A.2, 1.A.3, 1.A.4) shown in Figure 1 may vary. In general, the length of the links may vary widely and may reflect the needs of the specific application. The dimensions of the links shown in Figure 1 and 2 may be chosen to optimally support the ergonomics of the whole right human arm, in particular its shoulder, fore and back arm portions.

Figures 3 and 4 are perspective views of the assistive assembly (3) of the embodiment shown in Figure 1. The assistive assembly (3) comprises three assistive actuators (3.C.1, 3.C.2, 3.C.3) that take the form of hydraulic cylinders in fluid connection with the actuators of the main assembly and four assistive links (3.A.1, 3.A.2, 3.A.3, 3.A.4). The assistive links and the assistive actuators are arranged in a way as to represent the links and the actuators of the main assembly (1) in a way that the main assembly (1) and the assistive assembly (3) move in an essentially synchronized way. The assistive assembly (3) shown in Figure 3 further comprises a first and a second force regulator unit (3.E.1, 3.E.2). The force regulator units have a first and a second end. The first end of the force regulator units are the energy storage units which are movably connected to the horizontal frame of the support assembly (3.F.1) which is movably connected to the assistive base support (3.G.1). The force regulator units take the form of toothed cams with chains as force transmission units and with clock springs as energy storage units to provide the assistive force. The toothed cams are configured to engage with the chain and to redirect the assistive force in an axis parallel to the coronal plane to the corresponding interface point on the assistive links, resulting in a redirected force acting on the assistive actuator (3.C.1, 3.C.2, 3.C.3). Thus, the clock springs act as energy storage units or release units in support of the assistive assembly (3). A second end of the chain is connected to the bar linkages of the assistive assembly through a wire or other flexible connecting elements such as a rope, a cable, a snare, a string, a belt, a chain, but also through any inflexible connecting element. Whilst Figures 1, 3 and 4 show a clock spring, any other mechanical deformation springs, preferably metal springs, may also be used.

### SHORT DESCRIPTION OF DRAWINGS FOR INDUSTRIAL MANIPULATOR

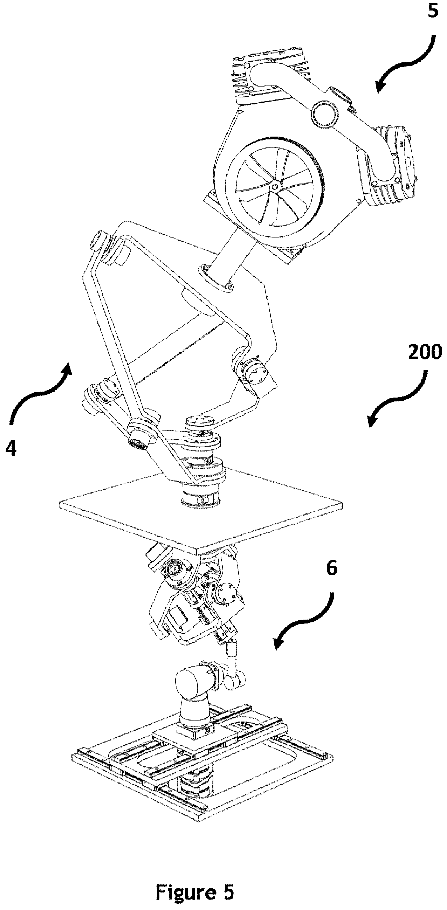

Figure 5 is a perspective view of an embodiment of the support device in the form of an industrial parallel linkage manipulator.

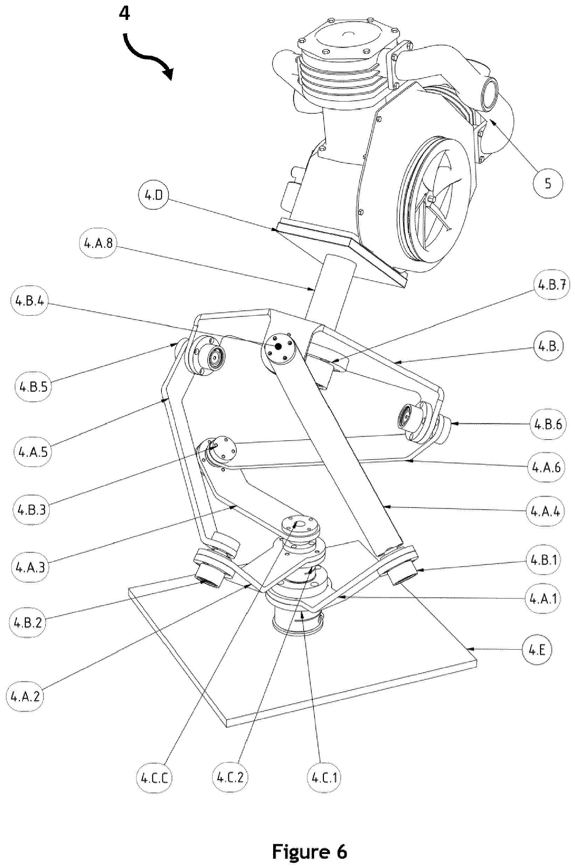

Figure 6 is a perspective view of an embodiment of the main assembly of the support device in the form of an industrial parallel linkage manipulator.

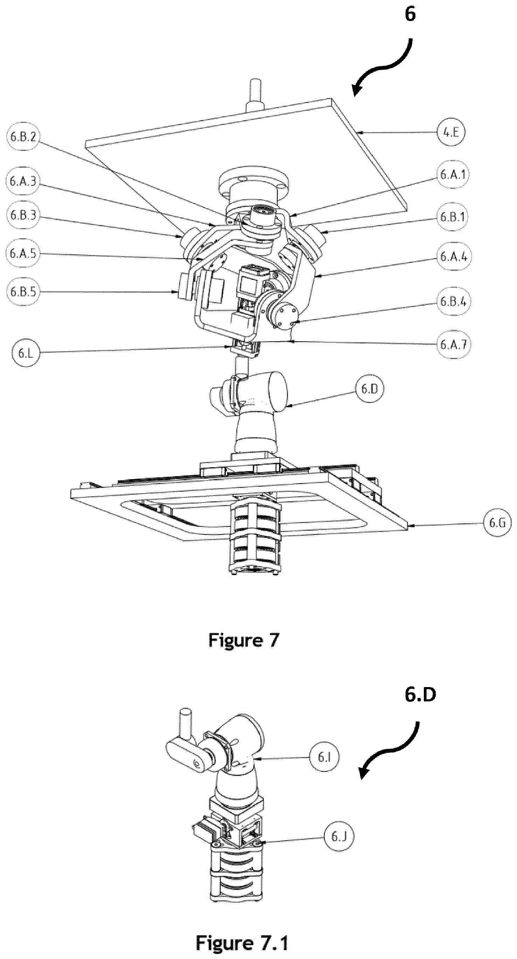

Figure 7 is a perspective view of an embodiment of the assistive assembly of the support device in the form of an industrial parallel linkage manipulator.
Figure 7.1 is a perspective view of an embodiment of force regulator assembly of the assistive device in the form of an spring, servo shift, gearbox and cam mechanism.

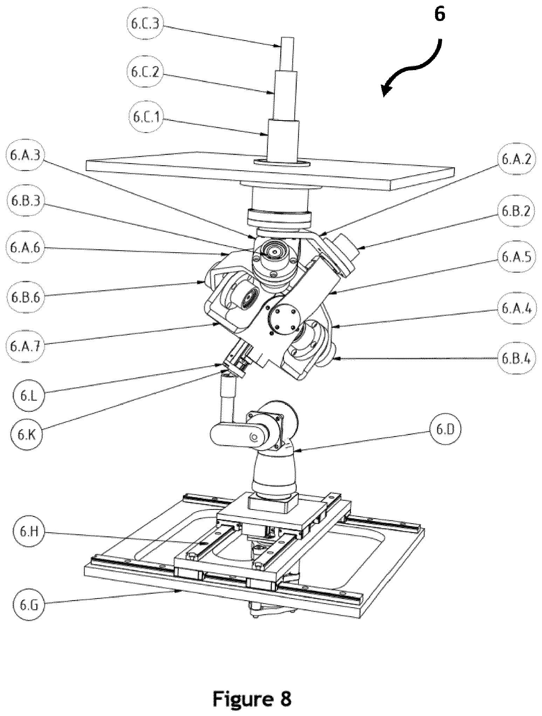

Figure 8 is another perspective view of an embodiment of the assistive assembly of the support device in the form of an industrial parallel linkage manipulator.

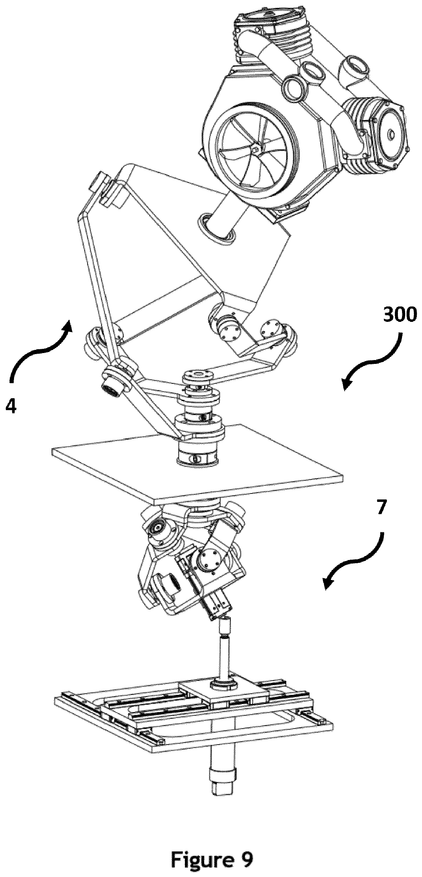

Figure 9 is a perspective view of an different force regulator embodiment of the assistive assembly of the support device in the form of an industrial parallel linkage manipulator.

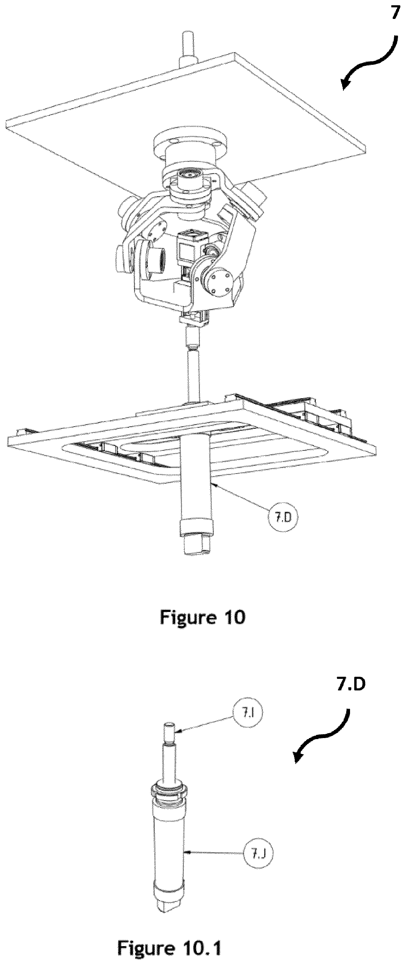

Figure 10 is a perspective view of an second force regulator embodiment of the assistive assembly of the support device in the form of an industrial parallel linkage manipulator.
Figure 10.1 is a perspective view of an embodiment of force regulator assembly of the assistive device in the form of an pneumatic cylinder.

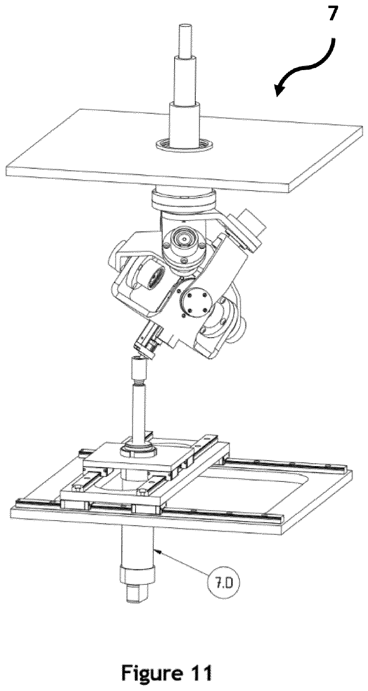

Figure 11 is another perspective view of an second force regulator embodiment of the assistive assembly of the support device in the form of an industrial parallel linkage manipulator.

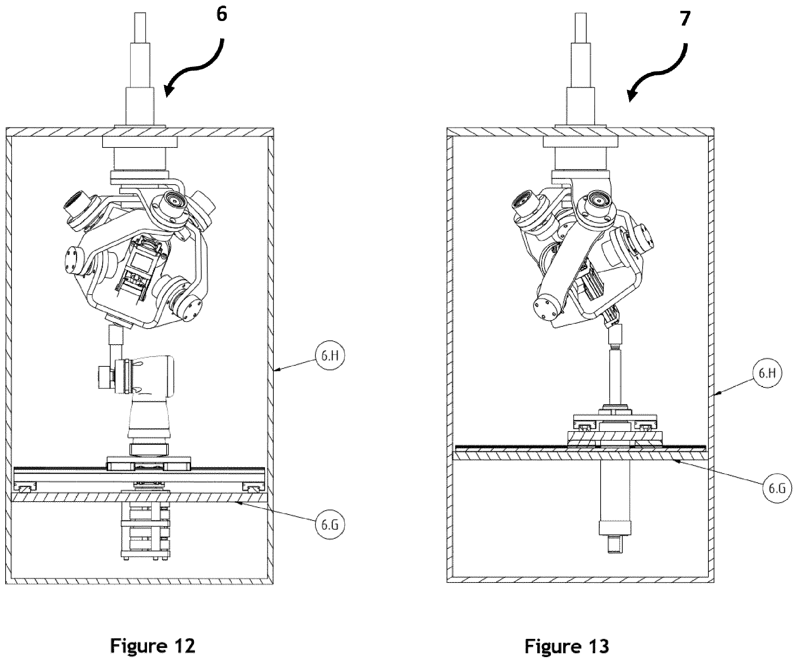

Figure 12 is a section view of an embodiment of the support device in the form of an industrial parallel linkage manipulator.
Figure 13 is a section view of an embodiment of the supporting device in the form of an industrial parallel linkage manipulator with a different force regulator concept.

### DETAILED DESCRIPTION OF DRAWINGS FOR INDUSTRIAL MANIPULATOR

The embodiments disclosed herein are merely examples. The figures are not necessarily to scale but they intend to teach the skilled person to carry out the present invention.

In Figure 5, the support device (200) takes the form of an industrial parallel manipulator to assist the whole payload (5) in its center of gravity thereby enabling the user to manipulate and position the payload (5) in five degrees of freedom without perceiving the static load enabling the option to perform work on the payload (5) while it is fully supported by the support device (200). The support device (200) includes a main assembly (4) and an assistive assembly (6). The assistive assembly (6) of Figure 5 is in shaft connection with the main assembly (4). The shaft connections between the links are not clearly shown in Figure 5 nor any of the Figures but are immediately clear for the skilled person. Shafts are arranged such that if the connected linkage of the assistive system (6) is actuated, this actuation is transferred through the shaft to the corresponding connected linkage in the main assembly (4) and the other way around. In Figure 5, the assistive assembly (6) is a smaller scale representation of the of the main assembly (4) configured to represent the directional movements of the main assembly (4) such that the main assembly (4) and the assistive assembly (6) move in an essentially synchronized way. For example, the assistive assembly (6) may be equal in size or even bigger. Preferably one half of the size of the main assembly or smaller, for example one third, one fourth, one fifth or even one tenth of the size of the main assembly (4) as shown in Figure 5. The smaller the size of the assistive assembly (6) is, the better the compacter the enclosure is.

Thus, the support device (200) shown in Figure 5 allows for supporting five degree of freedom of the payload (5). A first interface ensures the connection with the payload (5). In Figure 5, a second interface ensures the connection with a base which is not shown. The second interface to the base typically reversibly mounted on a frame, carrier, linear guide or directly on the infrastructure. The main assembly (4) of Figure 5 is further exemplified in Figure 6. The assistive assembly (6) of Figure 5 is further detailed in Figures 7 and 8.

Figure 6 is a perspective view of the main assembly (4) of the embodiment shown in Figure 5. The main assembly (4) comprises three actuator shafts (4.C.1, 4.C.2, 4.C.3), which are connected to the top of baseplate (4.E) through multiple bearing houses, such the main actuator shafts (4.C.1, 4.C.2, 4.C.3) can rotate around on common rotation point. And eight transfer links (4.A.1, 4.A.2, 4.A.3, 4.A.4, 4.A.5, 4.A.6, 4.A.7, 4.A.8) that represent the parallel bar linkage mechanism of the main assembly. Transfer Link (4.A.8) is connected to the payload (5) through a quick release plate (4.D) shown in Figure 6. The main assembly (4) further comprises six dependent rotation means (4.B.1, 4.B.2, 4.B.3, 4.B.4, 4.B.5, 4.B.6), one independent rotation (4.B.7) ensuring a combined motion freedom of the first interface resulting in a maximum of five degree of freedom movement for the operator.

The lengths of the transfer links (4.A.1, 4.A.2, 4.A.3, 4.A.4, 4.A.5, 4.A.6, 4.A.7, 4.A.8) shown in Figure 5 may vary. In general, the length of the bar linkages may vary widely and may reflect the needs of the specific application. The dimensions of the links shown in Figure 5 and 6 may be chosen to optimally support the ergonomics of the operator in the preformed handling.

Figures 7 and 8 are perspective views of the assistive assembly (6) of the embodiment shown in Figure 5. The assistive assembly (6) comprises three assistive actuator shafts (6.C.1, 6.C.2, 6.C.3) which take the form of a shaft and are connected through a shaft coupling with the actuator shaft of the main assembly, such the main actuator shafts and corresponding assistive actuator shafts form an stiff torsion connection allowing position and force transfer. The assistive assembly (6) further comprises seven assistive transfer links (6.A.1, 6.A.2, 6.A.3, 6.A.4, 6.A.5, 6.A.6, 6.A.7). The assistive transfer links and the actuator shafts are arranged in a way as to represent the links and the actuator shafts of the main assembly (4) in a way that the main assembly (4) and the assistive assembly (6) move essential synchronically. The assistive assembly (6) shown in Figure 7 further comprises a force regulator assembly (6.D). The force regulator assemblies, which is movable connected to a parallel plate (6.G) through an planar guide assembly (6.H) comprising linear guiding rails arranged in a way these enable motion in 2 degrees of freedom, such the force regulator assembly is free movable in a planar motion parallel to the baseplate (4.E). The parallel plate (6.G) is fixed connected to bottom side of the baseplate (4.E) through the housing (6.H) shown in Figure 12. The force regulator assembly has a first and second end. The first end takes the form of a gearbox, crankshaft combination as force transmission units (6.1). A second end takes the form of a clock spring, servo load shift as energy storage units (6.J) which provide tunable assistive force. The energy storage unit (6.J) can be tunned trough shifting the servo load shift unit. This servo load shift unit is not disclosed in this patent as it will be protected in an additional patent. This unit has the capability to shift output torque will under load and at a standstill, without changing shifting resistance friction in correlation to applied output torque. In this embodiment the shifting is done by a sensor, switch or any other electric trigger, in combination with a controller and servo shift motor. The actuation of this shifting motion is not limited to electrical power components as mechanical applied shift force of any form will be sufficient to perform this shifting motion. The sensor, switch or trigger and controller are not clearly shown in Figure 5 nor any of the Figures but are immediately clear for the skilled person. The sensor, controller and servo motor are arranged such that if the on/off sensor is triggered the controller positions servomotor and thereby also the shifts the servo load shift unit, in such a way the output torque is essential equal to the reaction force induced by the connected payload (5). The second end being the force transfer unit (6.1) is connected to the interface point (6.K) through a ball joint such the effect of this assistive force is perpendicular to the planar motion of the planar guide assembly (6.H). The resulting force perpendicular to the baseplate (4.E) acting on the interface point (6.K) is independent of this interface point (6.K) position. The assistive transfer links (6.A.1, 6.A.2, 6.A.3, 6.A.4, 6.A.5, 6.A.6, 6.A.7) and linear stage (6.L) redirect this force to the corresponding actuator shaft (6.C.1, 6.C.2, 6.C.3).

The interface point (6.K) is connected to top assistive transfer link (6.A.4) through a linear stage (6.L) . The linear stage has a first and a second end. The first end being the base part with adjustment screw which is fixed connected to the top side of the transfer link (6.A.4). The second end being the adjustable slider which is fixed connected to the interface point (6.K) and connected to the first end trough a Bal screw and linear guides, such this second end can move in a linear direction. The actuation and repositioning of the linear stage (6.L) is not limited to electrical power components as mechanical applied torque of any form will be sufficient to perform this repositioning. The sensor, switch or trigger and controller are not clearly shown in Figure 5 nor any of the Figures but are immediately clear for the skilled person. The sensor , controller and servo motor are arranged such that if the in/out sensor is triggered the controller positions servomotor and thereby also repositions the second end of the linear stage (6.L), such the distance between the interface point (6.K) and Transfer link (6.A.4) is essentially equal in correlation with the distance between the center of gravity of the payload (5) and the transfer link (4.A.4) Taking the universal scaling factor between main (4) and assistive (6) assembly into account.

Thus, the clock springs act as energy storage or release unit in support of the assistive assembly (6). Whilst Figures 5, 7 and 8 show a clock spring, any other springs, preferably metal springs, air spring, magnetic spring may also be used.

Figures 10 and 11 are perspective views of the assistive assembly (7) of the alternative embodiment for the force regulator assembly shown in Figure 9. further comprises a force regulator assembly (7.D). The force regulator assembly, which is movable connected to a parallel plate (6.G) through an planar guide assembly (6.H) comprising linear guiding rails arranged in a way these enable motion in 2 degrees of freedom, such the force regulator assembly is free movable in a planar motion parallel to the baseplate (4.E). The parallel plate (6.G) is fixed connected to bottom side of the baseplate (4.E) through the housing (6.H) shown in Figure 13. The force regulator assembly has a first and a second end. The first end being the energy storage unit (7.J) takes the form of a pneumatic cylinder, pressure regulator, high and low pressure tank, resulting in a adaptable constant force spring which provide the assistive force. The regulator and tanks are not clearly shown in Figure 10 and 11 nor any of the Figures but are immediately clear for the skilled person. The regulator and tanks are arranged such that the output force resulting from the cylinder is constant and essential equal to the reaction force induced by the connected payload (5). The second end being the force transfer unit (7.1) in this embodiment the tread end of the cylinder shaft. The cylinder shaft is connected to the interface point (6.K) through a ball joint such the effect of this assistive force is perpendicular to the planar motion of the planar guide assembly (6.H). The resulting force perpendicular to the baseplate (4.E) acting on the interface point (6.K) is independent of this interface point (6.K) position. The assistive transfer links (6.A.1, 6.A.2, 6.A.3, 6.A.4, 6.A.5, 6.A.6, 6.A.7) and linear stage (6.L) redirect this force to the corresponding actuator shaft (6.C.1, 6.C.2, 6.C.3).

Thus, the cylinder act as energy storage units or release units in support of the assistive assembly (7). A second end of the pneumatic cylinder is connected to the interface point (6.K) of the assistive assembly through a ball joint or other flexible connecting elements such as a rubber, multi joint, flexing, .... Whilst Figure 9 show an air spring in the form of a cylinder filed with pressurized Air, any other mechanical deformation springs, preferably metal springs, may also be used.

### SHORT DESCRIPTION OF DRAWINGS FOR PRINCIPAL DEVICES

Figure 14 is a perspective view of an embodiment of the support device including the main and assistive device in the form of an multi degree of freedom in combination with one link.

Figure 15 is a perspective view of an embodiment of the support device including the main and assistive device in the form of a serial manipulator with two actuated degrees of freedom and two links.

Figure 16 is a perspective view of an embodiment of the support device including the main and assistive device in the form of a parallel manipulator with two actuated degrees of freedom and 4 position interdepending links.

### SHORT DESCRIPTION OF DRAWINGS FOR WEAREBLE EXOSKELETON INTERACTION WITH A HUMAN

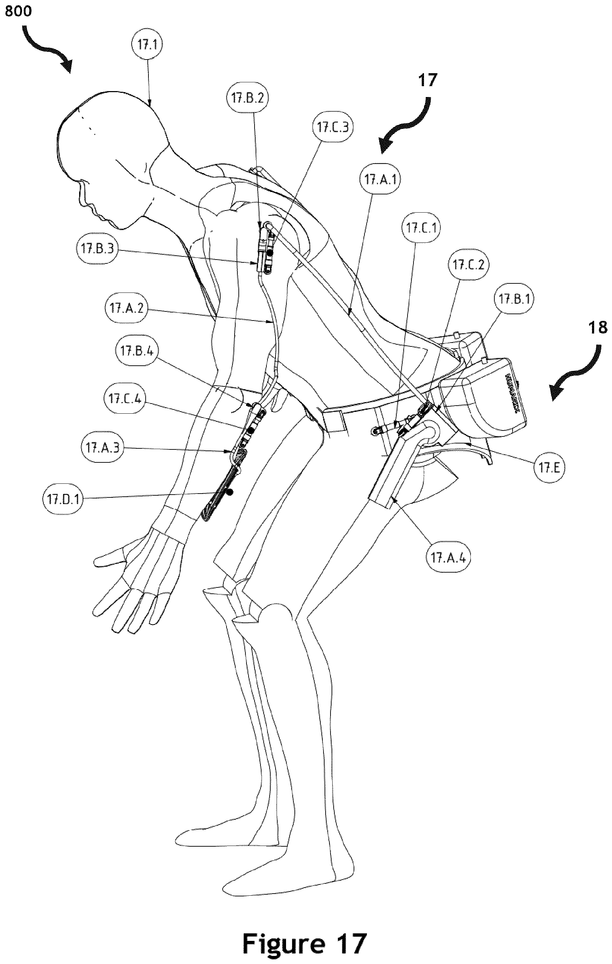

Figure 17 is a perspective view of an embodiment of the support device in the form of an exoskeleton for both whole arms worn by a human with virtual rotation points and additional tilt compensation.

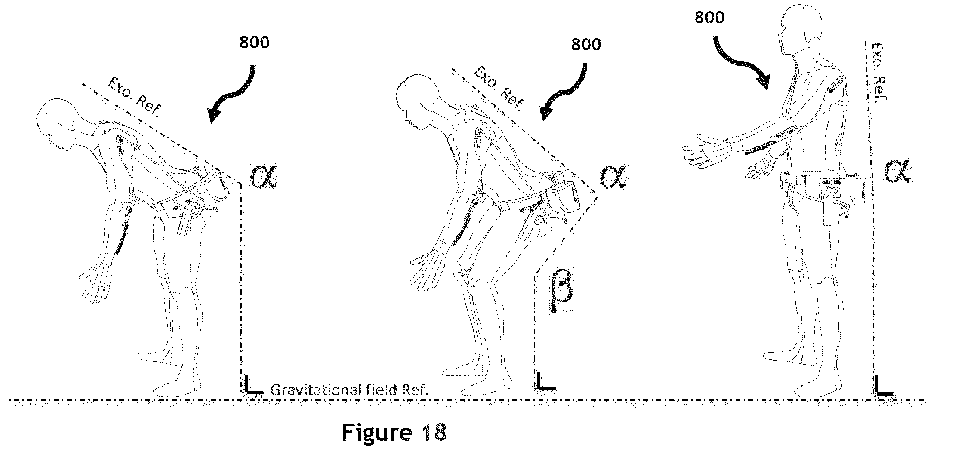

Figure 18 is a left side overview of three possible tilting positions of the human's upper body while carrying an exoskeleton for both arms including the tilt compensation. This view shows the change in reference plane in relation to the gravitational field.

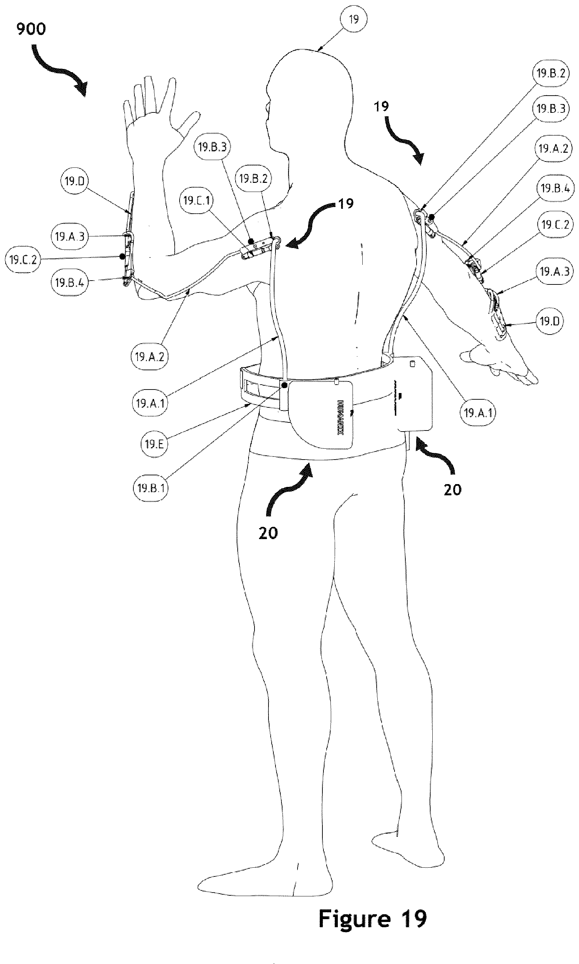

Figure 19 is a perspective view of an embodiment of the supporting device in the form of an exoskeleton for both arms using virtual rotation points and waist belt interface to enhance the users comfort.

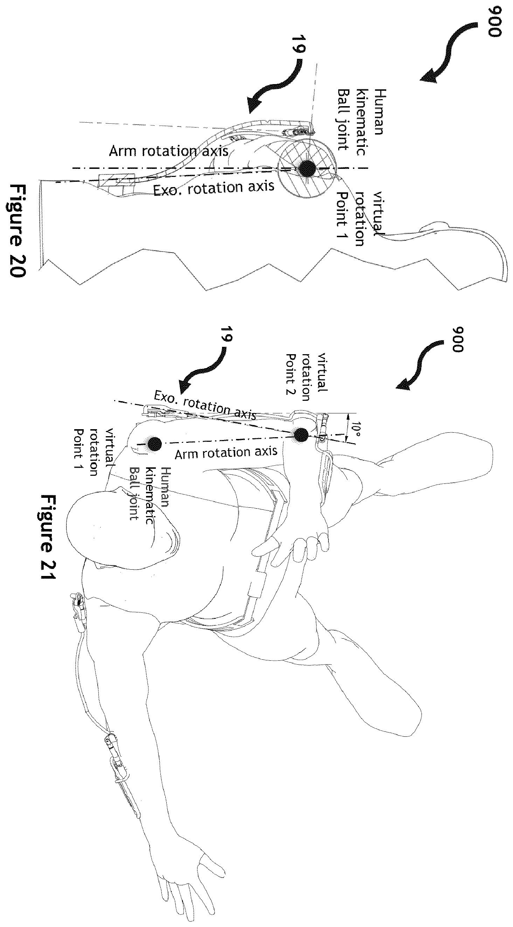

Figure 20 is a partial back view of an embodiment of the support device in the form of an exoskeleton for the whole left arm worn by a human, showing the virtual rotation point of the exoskeleton in correlation to the human's shoulder ball joint.

Figure 21 is a top view of an embodiment of the support device in the form of an exoskeleton for both whole arms worn by a human, showing the virtual rotation point of the exoskeleton in correlation to the human's elbow and shoulder joint.

### DETAILED DESCRIPTION OF DRAWINGS FOR PRINCIPAL DEVICES

The embodiments disclosed herein are merely examples to clarify the method and principals. The figures are not necessarily to scale but they intend to teach the skilled person to carry out the present invention.

In Figure 14, the support device (500) takes the form of an multi motion manipulator to assist a payload (11.D), more specific one link what can move in 2 different actuated rotational degrees of freedom while compensating for this payload (11.D) independent of the spatial position and orientation of this load, such the compensation force acting in any of the actuated degree of freedom is depending on the position of all actuated degrees of freedom. Thereby enabling the operator to perform work and motion of this payload (11.D) whilst fully supported by the support device (100) during the motion and at any static position or orientation. The support device (100) includes a main assembly (11) and an assistive assembly (12). The assistive assembly (12) of Figure 14 is in fluid connection with the main assembly (11). The hydraulic connections between the hydraulic cylinders are not shown in Figure 14 nor any of the Figures but are immediately clear for the skilled person. The hydraulic cylinders are arranged such that if the hydraulic cylinders of the assistive assembly (12) are actuated, this actuation in the form of position and force is transferred through the fluid connection to the corresponding hydraulic cylinders in the main assembly (11) and the other way around, such if the hydraulic cylinders of the main assembly (11) are actuated, this actuation is transferred to the corresponding cylinders in the assistive assembly (12), more specific hydraulic cylinder (11.C.1) of the main assembly (11) is back to back coupled trough a flexible hydraulic tube to cylinder (12.C.1) of the assistive assembly (12), all additional cylinders are coupled in a similar back to back principal way. In Figure 14, the assistive assembly (12) is a smaller scale representation of the main assembly (11) configured to represent the bidirectional movements of the main assembly (11) such that the main assembly (11) and the assistive assembly (12) move in an essentially synchronized way. For example, the assistive assembly (12) can be one half of the size of the main assembly, preferably even smaller, for example one third the size of the main assembly (11) as shown in Figure 14.

Thus, the support device (500) shown in Figure 14 allows for supporting in 2 degrees of freedom. A first interface ensures the connection the payload which is not shown. A quick release plate is typically reversibly mounted on the top of the link. In Figure 14, a second interface ensures the connection with a base plate (11.E) The main assembly (11) and assistive assembly (12) of Figure 14 is further exemplified in detailed bellow.

The main assembly (11) of the embodiment shown in Figure 14 comprises one link (11.A.1) and one baseplate (11.E) what represent the main structure parts of the main assembly. The main assembly (11) further comprises two independent degrees of freedom (11.B.1, 11.B.2) and two hydraulic actuators (11.C.1, 11.C.2,), ensuring the actuated rotatable connections of the main link to the baseplate resulting in a spherical motion freedom of the payload.

The assistive assembly (12) of the embodiment shown in Figure 14 comprises two assistive actuators (12.C.1, 12.C.2) that take the form of hydraulic cylinders in fluid connection with the actuators of the main assembly. The assistive assembly (12) further comprises one assistive link (12.A.1), one assistive baseplate (12.E) two independent degrees of freedom (12.B.1, 12.B.2) ensuring the rotatable connections of the assistive link to the assistive baseplate. The assistive link, assistive degrees of freedom and the assistive actuators are arranged in a way as to represent the links and the actuators of the main assembly (11) in a way that the main assembly (11) and the assistive assembly (12) move in an essential synchronic way. The assistive assembly (12) shown in Figure 14 further comprises a force regulator assembly (12.D). The force regulator assembly has a first and a second end. The first end of the force regulator assembly is the energy storage unit which is movably connected to the base beam (12.F) through a plainer degree of freedom parallel to the assistive baseplate (12.E) in the form of a bearing, linkage assembly (12.G). The base beam is fixed connected to the assistive baseplate (12.E). The force regulator assembly takes the form of a toothed cam and chain as force transmission units and a clock spring as energy storage units which provide the assistive force. The toothed cam is configured to engage with a chain and to redirect the assistive force in an axis perpendicular to the assistive baseplate (12.E) corresponding interface point (12.K) on the assistive link (12.A.1), resulting in a redirected force acting on the assistive actuator (12.C.1,12.C.2). Thus, the clock springs act as energy storage units or release units in support of the assistive assembly (12). A second end of the chain is connected to the bar linkages of the assistive assembly through a wire or other flexible connecting elements such as a rope, a cable, a snare, a string, a belt, a chain, but also through any inflexible connecting element.

In Figure 15, the support device (600) takes the form of an serial manipulator to assist a payload (13.D), more specific two links what can move in 2 different actuated rotational degrees of freedom while compensating for this payload (13.D) independent of the spatial position and orientation of this load, such the compensation force acting in any of the actuated degree of freedom is depending on the position of all actuated degrees of freedom. Thereby enabling the operator to perform work and motion of this payload (13.D) whilst fully supported by the support device (600) during the motion and at any static position or orientation. The support device (600) includes a main assembly (13) and an assistive assembly (14). The assistive assembly (14) of Figure 15 is in fluid connection with the main assembly (13). The hydraulic connections between the hydraulic cylinders are not shown in Figure 15 nor any of the Figures but are immediately clear for the skilled person. The hydraulic cylinders are arranged such that if the hydraulic cylinders of the assistive assembly (14) are actuated, this actuation in the form of position and force is transferred through the fluid connection to the corresponding hydraulic cylinders in the main assembly (13) and the other way around, such if the hydraulic cylinders of the main assembly (13) are actuated, this actuation is transferred to the corresponding cylinders in the assistive assembly (14), more specific hydraulic cylinder (13.C.1) of the main assembly (13) is back to back coupled trough a flexible hydraulic tube to cylinder (14.C.1) of the assistive assembly (14), all additional cylinders are coupled in a similar back to back principal way. In Figure 15, the assistive assembly (14) is a smaller scale representation of the main assembly (13) configured to represent the bidirectional movements of the main assembly (13) such that the main assembly (13) and the assistive assembly (14) move in an essentially synchronized way. For example, the assistive assembly (14) can be one half of the size of the main assembly, preferably even smaller, for example one third the size of the main assembly (13) as shown in Figure 15.

Thus, the support device (600) shown in Figure 15 allows for supporting in 2 degrees of freedom. A first interface ensures the connection the payload which is not shown. A quick release plate is typically reversibly mounted on the top of the link. In Figure 15, a second interface ensures the connection with a base plate (13.E) The main assembly (13) and assistive assembly (14) of Figure 15 is further exemplified in detailed bellow.

The main assembly (13) of the embodiment shown in Figure 15 comprises two links (13.A.1, 13.A.2) and one baseplate (13.E) what represent the main structure parts of the main assembly. The main assembly (13) further comprises two independent degrees of freedom (13.B.1, 13.B.2) and two hydraulic actuators (13.C.1, 13.C.2), ensuring the actuated rotatable connections of the main links in correlation to each other and to the baseplate (13.E) resulting in a planar motion freedom of the payload perpendicular to the baseplate (13.E).

The assistive assembly (14) of the embodiment shown in Figure 15 comprises two assistive actuators (14.C.1, 14.C.2) that take the form of hydraulic cylinders in fluid connection with the actuators of the main assembly. The assistive assembly (14) further comprises two assistive link (14.A.1, 14.A.2), one assistive baseplate (14.E) two independent degrees of freedom (14.B.1, 14.B.2) ensuring the rotatable connections of the assistive links to each other and the assistive baseplate (14.E). The assistive links, assistive degrees of freedom and the assistive actuators are arranged in a way as to represent the links and the actuators of the main assembly (13) in a way that the main assembly (13) and the assistive assembly (14) move in an essential synchronic way. The assistive assembly (14) shown in Figure 15 further comprises a force regulator assembly (14.D). The force regulator assembly has a first and a second end. The first end of the force regulator assembly is the energy storage unit which is movably connected to the base beam (14.F) through a plainer degree of freedom parallel to the assistive baseplate (14.E) in the form of a bearing, linkage assembly (14.G). The base beam (14.F) is fixed connected to the assistive baseplate (14.E). The force regulator assembly takes the form of a toothed cam and chain as force transmission units and a clock spring as energy storage units which provide the assistive force. The toothed cam is configured to engage with a chain and to redirect the assistive force in an axis perpendicular to the assistive baseplate (14.E) corresponding interface point (14.K) on the assistive link (14.A.2), resulting in a redirected force acting on the assistive actuator (14.C.1,14.C.2). Thus, the clock springs act as energy storage units or release units in support of the assistive assembly (14). A second end of the chain is connected to the link of the assistive assembly through a wire or other flexible connecting elements such as a rope, a cable, a snare, a string, a belt, a chain, but also through any inflexible connecting element.

In Figure 16, the support device (700) takes the form of an parallel manipulator to assist a payload (15.D), more specific fore interdependent links end to end connected to each other by 5 rotational degrees of freedom (15.B.1, 15.B.2, 15.B.3, 15.B.4, 15.B.5) where rotation point (15.B.1) and (15.B.2) are actuated and rotate around a mutual rotation axis. This interdependent movement of al the links leads to motion in 2 different degrees of freedom, payload (15.D) is compensated in a planar motion freedom parallel to the main baseplate independent of the spatial position and orientation of this load, such the compensation force acting in any of the actuated degree of freedom is depending on the position of all actuated degrees of freedom. Thereby enabling the operator to perform work and motion of this payload (15.D) whilst fully supported by the support device (700) during the motion and at any static position or orientation. The support device (700) includes a main assembly (15) and an assistive assembly (16). The assistive assembly (16) of Figure 16 is in fluid connection with the main assembly (15). The hydraulic connections between the hydraulic cylinders are not shown in Figure 15 nor any of the Figures but are immediately clear for the skilled person. The hydraulic cylinders are arranged such that if the hydraulic cylinders of the assistive assembly (16) are actuated, this actuation in the form of position and force is transferred through the fluid connection to the corresponding hydraulic cylinders in the main assembly (15) and the other way around, such if the hydraulic cylinders of the main assembly (15) are actuated, this actuation is transferred to the corresponding cylinders in the assistive assembly (16), more specific hydraulic cylinder (15.C.1) of the main assembly (15) is back to back coupled trough a flexible hydraulic tube to cylinder (16.C.1) of the assistive assembly (16), all additional cylinders are coupled in a similar back to back principal way. In Figure 16, the assistive assembly (16) is a smaller scale representation of the main assembly (15) configured to represent the bidirectional movements of the main assembly (15) such that the main assembly (15) and the assistive assembly (16) move in an essentially synchronized way. For example, the assistive assembly (16) can be one half of the size of the main assembly, preferably even smaller, for example one third the size of the main assembly (15) as shown in Figure 16.

Thus, the support device (700) shown in Figure 16 allows for supporting in 2 degrees of freedom. A first interface ensures the connection the payload which is not shown. A quick release plate is typically reversibly mounted on the top of the link. In Figure 16, a second interface ensures the connection with a base plate (15.E) The main assembly (15) and assistive assembly (16) of Figure 16 is further exemplified in detailed bellow.

The main assembly (15) of the embodiment shown in Figure 16 comprises two links (15.A.1, 15.A.2) and one baseplate (15.E) what represent the main structure parts of the main assembly. The main assembly (15) further comprises five independent degrees of freedom (15.B.1, 15.B.2, 15.B.3, 15.B.4, 15.B.5) and two hydraulic actuators (15.C.1, 15.C.2), ensuring the actuated rotatable connections of the main links in correlation to each other and to the baseplate (15.E) resulting in a planar motion freedom of the payload perpendicular to the baseplate (15.E).

The assistive assembly (16) of the embodiment shown in Figure 16 comprises two assistive actuators (16.C.1, 16.C.2) that take the form of hydraulic cylinders in fluid connection with the actuators of the main assembly. The assistive assembly (16) further comprises fore assistive link (16.A.1, 16.A.2, 16.A.3, 16.A.4), one assistive baseplate (14.E) and five independent degrees of freedom (16.B.1, 16.B.2, 16.B.3, 16.B.4, 16.B.5) ensuring the rotatable connections of the assistive links to each other and the assistive baseplate (16.E). The assistive links, assistive degrees of freedom and the assistive actuators are arranged in a way as to represent the links and the actuators of the main assembly (15) in a way that the main assembly (15) and the assistive assembly (16) move in an essential synchronic way. The assistive assembly (16) shown in Figure 16 further comprises a force regulator assembly (16.D). The force regulator assembly has a first and a second end. The first end of the force regulator assembly is the energy storage unit which is movably connected to the base beam (16.F) through a plainer degree of freedom parallel to the assistive baseplate (16.E) in the form of a bearing, linkage assembly (16.G). The base beam (16.F) is fixed connected to the assistive baseplate (16.E). The force regulator assembly takes the form of a toothed cam and chain as force transmission units and a clock spring as energy storage units which provide the assistive force. The toothed cam is configured to engage with a chain and to redirect the assistive force in an axis perpendicular to the assistive baseplate (16.E) corresponding interface point (16.K) which is located on the axis of the mutual rotation degree of freedom (16.B.5) between link (16.A.4) and link (16.A.3), resulting in a redirected force acting on the assistive actuator (16.C.1,16.C.2). Thus, the clock springs act as energy storage units or release units in support of the assistive assembly (16). A second end of the chain is connected to the link of the assistive assembly through a wire or other flexible connecting elements such as a rope, a cable, a snare, a string, a belt, a chain, but also through any inflexible connecting element.

Whilst Figures 14 show a clock spring and hydraulic actuators, any other mechanical deformation springs and other type of actuating means may also be used, for example the once mentioned in this patent text.

The lengths of the all links shown in Figure 14,15 and 16 may vary. In general, the length of the links may vary widely and may reflect the needs of the specific application. The dimensions of the links shown in Figure 14,15 and 16 may be chosen to optimally support the payload of a target for a certain motion or position.

### DETAILED DESCRIPTION OF DRAWINGS FOR WEAREBLE EXOSKELETON

The embodiments disclosed herein are merely examples. The figures are not necessarily to scale but they intend to teach the skilled person to carry out the present invention.

In Figure 17, the support device (800) takes the form of an exoskeleton to assist the whole left and right arm of a human being thereby enabling the user to perform work and motion whilst fully supported by the support device (800) during the motion and at any static position or orientation. The support device (800) includes a main assembly (17) and an assistive assembly (18). The assistive assembly (18) of Figure 17 is in mechanical and fluid connection with the main assembly (17). The hydraulic connections between the hydraulic cylinders and torsion cable actuation rotation point (17.B.3) are not shown in Figure 17 nor any of the Figures but are immediately clear for the skilled person. The hydraulic cylinders and torsion cable connection are arranged such that if the hydraulic cylinders and or torsion cable end of the assistive system (18) are actuated, this actuation in the form of position and force is transferred through the fluid and or flexible shaft connection to the corresponding hydraulic cylinders and rotation point in the main assembly (17) and the other way around, such if the hydraulic cylinders and flexible shaft of the main assembly (17) are actuated, this actuation is transferred to the corresponding cylinders and rotation point in the assistive assembly (18). In Figure 17, the assistive assembly (18) is a smaller scale representation of the of the main assembly (17) configured to represent the bidirectional movements of the main assembly (17) such that the main assembly (17) and the assistive assembly (18) move in an essentially synchronized way.

Thus, the support device (800) shown in Figure 17 allows for supporting lateral, forward and backward motions of both arms and of the forearms. A first interface (17.D.1) ensures the connection with the arm. In Figure 17, a second interface (17.E) in the form of a waist which is typically reversibly mounted on the hips. Where the 2 additional actuated degrees of freedom per arm enable the device to compensate for torso position deviation in correlation to the gravitational field. The Tilt compensation of Figure 17 is further exemplified in Figure 18. Every orientation deviation of the torso in correlation to the gravitational field will result in a mismatch between the applied and desired assistive force. A fifth degree of freedom in combination with link four (17.A.4) and actuator (17.C.2) ensures the tilt position of the humans' upper body is detected and transferred to the assistive device. Figure 18 shows the mismatch between Exoskeleton reference and the gravitational field reference due to upper body motion. One additional actuator is focused on detecting and transferring these reference angles shown in figure 18 to the assistive device, such the force regulators inside the assistive device (18) change their interaction angle with the assistive links in an essentially synchronized way with the position of the upper body. Thereby resulting in proper weight compensation of the upper and lower arm in correlation to the gravitational field. Note that figure 17 does not show a detailed version of the assistive device (18), but rather an enclosure in which the assistive device is contained. The enclosure is reversibly mounted on the waist belt. Figure 17 therefore does not show a detailed view of the assistive device (18). The assistive device (18) enclosed shown in Figure 17 is based on the same principles describes above.

The main assembly (17) comprises four hydraulic actuators (17.C.1, 17.C.2, 17.C.3, 17.C.4), one interface for a torsion cable and four links (17.A.1, 17.A.2, 17.A.3, 17.A.4). The main assembly (17) further comprises four independent degrees of freedom (17.B.1, 17.B.2, 17.B.3, 17.B.4) ensuring the rotatable connection (17.B.4) of the second (17.A.2) and the third link (17.A.3) where the rest resulting in a maximum of freedom of movement for the wearer.

The lengths of the links (17.A.1, 17.A.2, 17.A.3, 17.A.4) shown in Figure 17 may vary. In general, the length of the links may vary widely and may reflect the needs of the specific application. The dimensions and orientation of the links and rotation points shown in Figure 17 are chosen to create a virtual rotation point shown in figures 20 and 21 to optimally support the ergonomics of the whole right and left human arm, in particular its shoulders, fore and back arms. Due to the use of these virtual rotation point the composition and range of motion are impacted in a positive way. Virtual rotation points enable parallel motion between the human's body and the exoskeleton while being located outside of the human and locally allow rotation around a different reference axis. The intersection points between the motion axis coming from the kinematic structure of the exoskeleton and the motion axis following from the humans kinematic structure, determines the location of this virtual rotation point.

In Figure 19, the support device (900) takes the form of an exoskeleton to assist the whole left and right arm of a human being thereby enabling the user to perform work and motion whilst fully supported by the support device (900) during the motion and at any static position or orientation. The support device (900) includes a main assembly (19) and an assistive assembly (20). The assistive assembly (20) of Figure 19 is in mechanical and fluid connection with the main assembly (19). The hydraulic connections between the hydraulic cylinders and torsion cable actuation rotation point (17.B.3) are not shown in Figure 19 nor any of the Figures but are immediately clear for the skilled person. The hydraulic cylinders and torsion cable connection are arranged such that if the hydraulic cylinders and or torsion cable end of the assistive system (20) are actuated, this actuation in the form of position and force is transferred through the fluid and flexible shaft connection to the corresponding hydraulic cylinders and rotation point in the main assembly (19) and the other way around, such if the hydraulic cylinders and flexible shaft of the main assembly (20) are actuated, this actuation is transferred to the corresponding cylinders and rotation point in the assistive assembly (20). In Figure 17, the assistive assembly (20) is a smaller scale representation of the of the main assembly (19) configured to represent the bidirectional movements of the main assembly (19) such that the main assembly (19) and the assistive assembly (20) move in an essentially synchronized way.

Thus, the support device (900) shown in Figure 19 allows for supporting lateral, forward and backward motions of both arms and of the forearms.

The assistive assembly (20) of Figure 19 is shown in an enclosure that is reversible mounted on the waist belt. Figure 19 therefore does not show a detailed view of the assistive device (20). The assistive device (20) enclosed shown in Figure 19 is based on the same principles describes above, meaning, it is a scaled representation of the main assembly including force regulator assemblies witch counteract gravitational forces acting on the human arms. These forces are transferred trough interfacing point (19.D), main linkages, main rotation points (19.B.1, 19.B.2, 19.B.3, 19.B.4), main actuators(19.C.1, 19.C.2), flexible shaft connected to and transferring from rotation point (19.B.3) and hydraulic couplings to the assistive assembly. this assembly transfers these gravitational forces trough the assistive links, Assistive degrees of freedom and a coupling to the force regulator and the other way around.

The main assembly (19) comprises two hydraulic actuators (19.C.1, 19.C.2), One interface for a torsion cable and tree links (19.A.1, 19.A.2, 19.A.3). The main assembly (19) further comprises four independent degrees of freedom (19.B.1, 19.B.2, 19.B.3, 19.B.4) ensuring a similar motion possibility in terms of degrees, such the wearable exoskeleton is not limiting any desired day tot day motion of the whole left and right arm.

## Claims

1. A force regulator assembly, comprising
a. a main assembly (1), comprising
i. a base support,
ii. one or more links (1.A.1, 1.A.2, 1.A.3, 1.A.4) wherein at least one is connected to the base support, said one or more links (1.A.1, 1.A.2, 1.A.3, 1.A.4) being arranged to move in at least two degrees of freedom,
b. an assistive assembly (3) comprising
i. an assistive base support (3.G.1),
ii. one or more assistive links (3.A.1, 3.A.2, 3.A.3, 3.A.4) wherein at least one is connected to the base assistive support, one or more assistive links (3.A.1, 3.A.2, 3.A.3, 3.A.4) being arranged to move in at least two degrees of freedom,
iii. one or more force regulator units (3.E.1, 3.E.2), comprising an energy storage unit, connected through a force transmission unit to an assistive link (3.A.1, 3.A.2, 3.A.3, 3.A.4),
c. a mechanical, unpowered connection between the main and assistive assemblies (1, 3),
i. wherein the assistive (3) is arranged so that this connection results in the assistive assembly (3) being a representation of the main assembly (1), in that forces in the main assembly (1) result in forces in the assistive assembly (3) and the other way around, so that as a consequence the potential displacement of the main assembly (1) resulting from these forces also leads to a displacement of the assistive assembly (3), and the other way around;
ii. wherein the assistive assembly (3) is arranged so that this connection results in that the forces experienced by the link (1.A.1, 1.A.2, 1.A.3, 1.A.4) in the main assembly (1) in one degree of freedom are a function of the position of the links (1.A.1, 1.A.2, 1.A.3, 1.A.4) in the one or more of the other degrees of freedom, which makes it possible to apply desired compensation forces, provided by the force regulator units, based on said functions; and
**characterized in that** mechanical switches are present that is configured to alter the force applied by the force regulator units and/or the connection point of the force regulators to the assistive assembly (3).

2. A force regulator assembly according to claim 1, wherein said assistive assembly, is placed separately from and outside of the main assembly.

3. A force regulator assembly according to claim 1 or 2, wherein the forces experienced by the link in the main assembly in one degree of freedom are a function of the position of the links in the one or more of the other degrees of freedom, and the other way around, in a predetermined manner making it possible to apply desired compensation forces, provided by the force regulator units, for every position of the assembly.

4. A force regulator assembly according to claim 1, 2 or 3, wherein the one or more force regulator units apply forces on the assistive links, thereby potentially leading to displacements of the assistive assembly, wherein the weight of the force regulator unit is not felt by the main assembly due to its placement in the assistive assembly.

5. A force regulator assembly device according to claim 1, 2, 3 or 4 wherein there are a plurality of links, and/or a plurality of force regulator units, and wherein there are actuated degrees of freedom in the main assembly that are connected to representative degrees of freedom in the assistive assembly, and optionally also non-actuated degrees of freedom in which the main assembly can move that are not connected to degrees of freedom in the assistive assembly.

6. A force regulator assembly according to any of the preceding claims wherein at least one of the force regulator units is connected to the assistive base support with an arrangement, capable of providing a planar, preferably linear degree of freedom (and capable to cope with the resulting force thereon) such that the force regulator unit can follow the motion of the interface point where the force regulator unit interacts with the assistive link.

7. A force regulator assembly according to any of the preceding claims that is mechanically adjustable (without tools or without replacing parts), by adapting the link lengths and/or the stiffness of the links and/or by adjusting the placement of connection points for force regulator units so that the output forces of force regulator units can be adapted.

8. A force regulator assembly according to any of the preceding claims that does not contain any electronics, and is not externally powered.

9. A force regulator assembly according to any of the preceding claims 1 to 8 in which besides unpowered mechanical components also sensors, a control unit and one or more electronically controlled actuators are included to apply forces on the assistive assembly, to either serve as one or more powered force regulator units and/or to adapt the connection point of one or more unpowered force regulator units to the assistive assembly.

10. A force regulator assembly according to any of the preceding claims, wherein the assistive assembly is a scaled representation of the main assembly.

11. A force regulator assembly according to any of the preceding claims that serves as a wearable exoskeleton, wherein
a. the base support is adapted (by a provided harness) for being connected to a person (wearer); and
b. the force regulator units are adapted to apply compensation forces on the assistive assembly to support the person (wearer) in at least two degrees of freedom.

12. A force regulator assembly according to any of claims 1-11, that serves as part of a robotic manipulator, wherein
a. the base support of the main assembly is mounted on a base; and
b. the force regulator units are adapted to apply forces on the assistive links such that the resulting forces on the main links cause the main assembly to support its own weight and make it a self-supporting mechanical structure; and/or
c. the force regulator units are adapted to apply additional forces so that the resulting forces on the main actuators can support a payload or compensate for external forces.

13. A force regulator assembly according to any of the previous claims, wherein the connection between the main and assistive assemblies is achieved through stiff mechanical connections through a motion around a single rotation point, enabling flexible placement of the assistive assembly.

14. A force regulator assembly according to any of the previous claims wherein the degrees of freedom in the main and assistive assemblies are actuated using hydraulic actuators, and the connection between the main and assistive assemblies is achieved by connecting the hydraulic actuators using flexible hydraulic lines.

15. A force regulator assembly according to any of the previous claims, wherein the degrees of freedom in the main and assistive assemblies are connected using a closed hydraulic system of hydraulic cylinders connected using flexible hydraulic lines.

## Patentansprüche

1. Kraftregleranordnung, umfassend
a. eine Hauptanordnung (1), umfassend
i. einen Basisträger,
ii. eine oder mehrere Verknüpfungen (1.A.1, 1.A.2, 1.A.3, 1.A.4), wobei mindestens eine mit dem Basisträger verbunden ist, wobei die eine oder die mehreren Verknüpfungen (1.A.1, 1.A.2, 1.A.3, 1.A.4) eingerichtet sind, um sich in mindestens zwei Freiheitsgraden zu bewegen,
b. eine unterstützende Anordnung (3), umfassend
i. einen unterstützenden Basisträger (3.G.1),
ii. eine oder mehrere unterstützende Verknüpfungen (3.A.1, 3.A.2, 3.A.3, 3.A.4), wobei mindestens eine mit dem unterstützenden Basisträger verbunden ist, wobei eine oder mehrere unterstützende Verknüpfungen (3.A.1, 3.A.2, 3.A.3, 3.A.4) eingerichtet sind, um sich in mindestens zwei Freiheitsgraden zu bewegen,
iii. eine oder mehrere Kraftreglereinheiten (3.E.1, 3.E.2), umfassend eine Energiespeichereinheit, die über eine Kraftübertragungseinheit mit einer unterstützenden Verknüpfung (3.A.1, 3.A.2, 3.A.3, 3.A.4) verbunden ist,
c. eine mechanische, stromlose Verbindung zwischen der Haupt- und der unterstützenden Anordnung (1, 3),
i. wobei die unterstützende (3) eingerichtet ist, sodass diese Verbindung dazu führt, dass die unterstützende Anordnung (3) eine Darstellung der Hauptanordnung (1) ist, in der Kräfte in der Hauptanordnung (1) zu Kräften in der unterstützenden Anordnung (3) führen und umgekehrt, sodass in einer Konsequenz die mögliche Verschiebung der Hauptanordnung (1) infolge dieser Kräfte ebenso zu einer Verschiebung der unterstützenden Anordnung (3) führt und umgekehrt;
ii. wobei die unterstützende Anordnung (3) eingerichtet ist, sodass diese Verbindung dazu führt, dass die Kräfte, die durch die Verknüpfung (1.A.1, 1.A.2, 1.A.3, 1.A.4) in der Hauptanordnung (1) in einem Freiheitsgrad erfahren werden, eine Funktion der Position der Verknüpfungen (1.A.1, 1.A.2, 1.A.3, 1.A.4) in dem einen oder den mehreren der anderen Freiheitsgrade sind, was es ermöglicht, basierend auf diesen Funktionen, gewünschte Kompensationskräfte anzuwenden, die durch die Kraftreglereinheiten bereitgestellt werden; und
**dadurch gekennzeichnet, dass** mechanische Schalter vorhanden sind, die konfiguriert sind, um die Kraft, die durch die Kraftreglereinheiten ausgeübt wird, und/oder den Verbindungspunkt der Kraftregler zu der unterstützenden Anordnung (3) zu verändern.

2. Kraftregleranordnung nach Anspruch 1, wobei die unterstützende Anordnung getrennt von der Hauptanordnung und außerhalb davon platziert ist.

3. Kraftregleranordnung nach Anspruch 1 oder 2, wobei die Kräfte, die durch die Verknüpfung in der Hauptanordnung in einem Freiheitsgrad erfahren werden, eine Funktion der Position der Verknüpfungen in dem einen oder den mehreren der anderen Freiheitsgrade sind und umgekehrt, in einer zuvor bestimmten Weise, die es ermöglicht, für jede Position der Anordnung gewünschte Kompensationskräfte anzuwenden, die durch die Kraftreglereinheiten bereitgestellt werden.

4. Kraftregleranordnung nach Anspruch 1, 2 oder 3, wobei die eine oder die mehreren Kraftreglereinheiten Kräfte auf die unterstützenden Verknüpfungen ausüben, was möglicherweise zu Verschiebungen der unterstützenden Anordnung führt, wobei das Gewicht der Kraftreglereinheit aufgrund ihrer Platzierung in der unterstützenden Anordnung durch die Hauptanordnung nicht wahrgenommen wird.

5. Kraftregleranordnung nach Anspruch 1, 2, 3 oder 4, wobei eine Vielzahl von Verknüpfungen und/oder eine Vielzahl von Kraftreglereinheiten vorhanden sind, und wobei betätigte Freiheitsgrade in der Hauptanordnung, die mit repräsentativen Freiheitsgraden in der unterstützenden Anordnung verbunden sind, und optional ebenso nicht betätigte Freiheitsgrade vorhanden sind, in denen sich die Hauptanordnung bewegen kann, die nicht mit Freiheitsgraden in der unterstützenden Anordnung verbunden sind.

6. Kraftregleranordnung nach einem der vorstehenden Ansprüche, wobei mindestens eine der Kraftreglereinheiten mit dem unterstützenden Basisträger mit einer Einrichtung verbunden ist, die in der Lage ist, einen ebenen, vorzugsweise linearen Freiheitsgrad derart bereitzustellen (und in der Lage ist, mit der darauf wirkenden resultierenden Kraft zurechtzukommen), dass die Kraftreglereinheit der Bewegung des Schnittstellenpunkts folgen kann, wo die Kraftreglereinheit mit der unterstützenden Verknüpfung interagiert.

7. Kraftregleranordnung nach einem der vorstehenden Ansprüche, die mechanisch einstellbar ist (ohne Werkzeug oder ohne Austausch von Teilen), durch ein Anpassen der Verknüpfungslängen und/oder der Steifheit der Verknüpfungen und/oder durch das Anpassen der Platzierung der Verbindungspunkte für Kraftreglereinheiten, sodass die Ausgangskräfte der Kraftreglereinheiten angepasst werden können.

8. Kraftregleranordnung nach einem der vorstehenden Ansprüche, die keine Elektronik enthält und nicht extern mit Strom versorgt wird.

9. Kraftregleranordnung nach einem der vorstehenden Ansprüche 1 bis 8, in der neben stromlosen mechanischen Komponenten ebenso Sensoren, eine Steuereinheit und eine oder mehrere elektronisch gesteuerte Betätigungsglieder eingeschlossen sind, um Kräfte auf die unterstützende Anordnung auszuüben, um entweder als eine oder mehrere mit Strom versorgte Kraftreglereinheiten zu dienen und/oder den Verbindungspunkt einer oder mehrerer stromloser Kraftreglereinheiten an die unterstützende Anordnung anzupassen.

10. Kraftregleranordnung nach einem der vorstehenden Ansprüche, wobei die unterstützende Anordnung eine maßstabsgetreue Darstellung der Hauptanordnung ist.

11. Kraftregleranordnung nach einem der vorstehenden Ansprüche, die als tragbares Exoskelett dient, wobei
a. der Basisträger (durch einen bereitgestellten Gurt) für die Verbindung an einer Person (Träger) angepasst ist; und
b. die Kraftreglereinheiten angepasst sind, um Kompensationskräfte auf die unterstützende Anordnung auszuüben, um die Person (Träger) in mindestens zwei Freiheitsgraden zu tragen.

12. Kraftregleranordnung nach einem der Ansprüche 1 bis 11, die als Teil eines Robotermanipulators dient, wobei
a. der Basisträger der Hauptanordnung auf einer Basis montiert ist; und
b. die Kraftreglereinheiten angepasst sind, um Kräfte auf die unterstützenden Verknüpfungen derart auszuüben, dass die resultierenden Kräfte auf die Hauptverknüpfungen bewirken, dass die Hauptanordnung ihr Eigengewicht trägt und sie zu einer selbsttragenden mechanischen Struktur macht; und/oder
c. die Kraftreglereinheiten angepasst sind, um zusätzliche Kräfte anzuwenden, sodass die resultierenden Kräfte auf die Hauptbetätigungsglieder eine Nutzlast tragen oder externe Kräfte kompensieren können.

13. Kraftregleranordnung nach einem der vorstehenden Ansprüche, wobei die Verbindung zwischen der Haupt- und der unterstützenden Anordnung durch steife mechanische Verbindungen über eine Bewegung um einen einzigen Rotationspunkt erreicht wird, wobei eine flexible Platzierung der unterstützenden Anordnung ermöglicht wird.

14. Kraftregleranordnung nach einem der vorstehenden Ansprüche, wobei die Freiheitsgrade in der Haupt- und der unterstützenden Anordnung unter Verwendung von hydraulischen Betätigungsgliedern betätigt werden und die Verbindung zwischen der Haupt- und der unterstützenden Anordnung durch Verbinden der hydraulischen Betätigungsglieder unter Verwendung flexibler Hydraulikleitungen erreicht wird.

15. Kraftregleranordnung nach einem der vorstehenden Ansprüche, wobei die Freiheitsgrade in der Haupt- und der unterstützenden Anordnung unter Verwendung eines geschlossenen Hydrauliksystems aus Hydraulikzylindern verbunden sind, die unter Verwendung flexibler Hydraulikleitungen verbunden sind.

## Revendications

1. Ensemble régulateur de force, comprenant
a. un ensemble principal (1), comprenant
i. un support de base,
ii. une ou plusieurs biellettes (1.A.1, 1.A.2, 1.A.3, 1.A.4) dans lequel au moins une est reliée au support de base, lesdites une ou plusieurs biellettes (1.A.1, 1.A.2, 1.A.3, 1.A.4) étant agencées pour se mouvoir dans au moins deux degrés de liberté,
b. un ensemble auxiliaire (3) comprenant
i. un support de base auxiliaire (3.G.1),
ii. une ou plusieurs biellettes auxiliaires (3.A.1, 3.A.2, 3.A.3, 3.A.4) dans lequel au moins une est reliée au support de base auxiliaire, une ou plusieurs biellettes auxiliaires (3.A.1, 3.A.2, 3.A.3, 3.A.4) étant agencées pour se mouvoir dans au moins deux degrés de liberté,
iii. une ou plusieurs unités régulatrices de force (3.E.1, 3.E.2), comprenant une unité de stockage d'énergie, reliées par le biais d'une unité de transmission de force à une biellette auxiliaire (3.A.1, 3.A.2, 3.A.3, 3.A.4),
c. une liaison mécanique, non alimentée entre les ensembles principal et auxiliaire (1, 3),
i. dans lequel l'ensemble auxiliaire (3) est agencé de sorte que cette liaison résulte en l'ensemble auxiliaire (3) étant une représentation de l'ensemble principal (1), en ce que des forces dans l'ensemble principal (1) résultent en des forces dans l'ensemble auxiliaire (3) et inversement, de sorte qu'en conséquence le déplacement potentiel de l'ensemble principal (1) résultant de ces forces entraîne également un déplacement de l'ensemble auxiliaire (3), et inversement ;
ii. dans lequel l'ensemble auxiliaire (3) est agencé de sorte que cette liaison résulte en ce que les forces expérimentées par la biellette (1.A.1, 1.A.2, 1.A.3, 1.A.4) dans l'ensemble principal (1) dans un degré de liberté sont fonction de la position des biellettes (1.A.1, 1.A.2, 1.A.3, 1.A.4) dans l'un ou plusieurs des autres degrés de liberté, ce qui rend possible d'appliquer les forces de compensation souhaitées, fournies par les unités régulatrices de force, en fonction desdites fonctions ; et
**caractérisé en ce que** des commutateurs mécaniques sont présents qui sont configurés pour modifier la force appliquée par les unités régulatrices de force et/ou le point de liaison des régulateurs de force à l'ensemble auxiliaire (3).

2. Ensemble régulateur de force selon la revendication 1, dans lequel ledit ensemble auxiliaire, est placé séparément de et à l'extérieur de l'ensemble principal.

3. Ensemble régulateur de force selon la revendication 1 ou 2, dans lequel les forces expérimentées par la biellette dans l'ensemble principal dans un degré de liberté sont fonction de la position des biellettes dans l'un ou plusieurs des autres degrés de liberté, et inversement, d'une manière prédéterminée rendant possible d'appliquer les forces de compensation souhaitées, fournies par les unités régulatrices de force, pour chaque position de l'ensemble.

4. Ensemble régulateur de force selon la revendication 1, 2 ou 3, dans lequel les une ou plusieurs unités régulatrices de force appliquent des forces sur les biellettes auxiliaires, entraînant de ce fait potentiellement des déplacements de l'ensemble auxiliaire, dans lequel le poids de l'unité régulatrice de force n'est pas ressenti par l'ensemble principal du fait de son emplacement dans l'ensemble auxiliaire.

5. Dispositif d'ensemble régulateur de force selon la
revendication 1, 2, 3 ou 4 dans lequel il y a une pluralité de biellettes, et/ou une pluralité d'unités régulatrices de force, et dans lequel il y a des degrés de liberté actionnés dans l'ensemble principal qui sont reliés à des degrés de liberté représentatifs dans l'ensemble auxiliaire, et éventuellement également des degrés de liberté non actionnés dans lesquels l'ensemble principal peut se mouvoir qui ne sont pas reliés à des degrés de liberté dans l'ensemble auxiliaire.

6. Ensemble régulateur de force selon l'une quelconque des revendications précédentes dans lequel au moins l'une parmi les unités régulatrices de force est reliée au support de base auxiliaire avec un agencement, capable de fournir un degré de liberté planaire, de préférence linéaire (et capable de gérer la force résultante sur celui-ci) de telle sorte que l'unité régulatrice de force peut suivre le mouvement du point d'interface où l'unité régulatrice de force interagit avec la biellette auxiliaire.

7. Ensemble régulateur de force selon l'une quelconque des revendications précédentes qui est réglable mécaniquement (sans outils ou sans pièces de remplacement), en adaptant les longueurs de biellette et/ou la rigidité des biellettes et/ou en réglant l'emplacement des points de liaison pour des unités régulatrices de force de sorte que les forces de sortie des unités régulatrices de force peuvent être adaptées.

8. Ensemble régulateur de force selon l'une quelconque des revendications précédentes qui ne contient aucun composant électronique, et n'est pas alimenté de manière externe.

9. Ensemble régulateur de force selon l'une quelconque des revendications précédentes 1 à 8 dans lequel outre des composants mécaniques non alimentés sont inclus également des capteurs, une unité de commande et un ou plusieurs actionneurs commandés de manière électronique pour appliquer des forces sur l'ensemble auxiliaire, pour servir d'une ou plusieurs unités régulatrices de force alimentées et/ou pour adapter le point de liaison d'une ou plusieurs unités régulatrices de force non alimentées à l'ensemble auxiliaire.

10. Ensemble régulateur de force selon l'une quelconque des revendications précédentes, dans lequel l'ensemble auxiliaire est une représentation mise à l'échelle de l'ensemble principal.

11. Ensemble régulateur de force selon l'une quelconque des revendications précédentes qui sert d'exosquelette portable, dans lequel
a. le support de base est adapté (par un harnais fourni) pour être relié à une personne (porteur) ; et
b. les unités régulatrices de force sont adaptées pour appliquer des forces de compensation sur l'ensemble auxiliaire pour supporter la personne (porteur) dans au moins deux degrés de liberté.

12. Ensemble régulateur de force selon l'une quelconque des revendications 1 à 11, qui sert de partie d'un manipulateur robotique, dans lequel
a. le support de base de l'ensemble principal est monté sur une base ; et
b. les unités régulatrices de force sont adaptées pour appliquer des forces sur les biellettes auxiliaires de telle sorte que les forces résultantes sur les biellettes principales poussent l'ensemble principal à supporter son propre poids et en font une structure mécanique autoporteuse ; et/ou
c. les unités régulatrices de force sont adaptées pour appliquer des forces supplémentaires de sorte que les forces résultantes sur les actionneurs principaux puissent supporter une charge utile ou compenser des forces externes.

13. Ensemble régulateur de force selon l'une quelconque des revendications précédentes, dans lequel la liaison entre les ensembles principal et auxiliaire est réalisée par le biais de liaisons mécaniques rigides par le biais d'un mouvement autour d'un point de rotation unique, permettant un emplacement flexible de l'ensemble auxiliaire.

14. Ensemble régulateur de force selon l'une quelconque des revendications précédentes dans lequel les degrés de liberté dans les ensembles principal et auxiliaire sont actionnés à l'aide d'actionneurs hydrauliques, et la liaison entre les ensembles principal et auxiliaire est réalisée en reliant les actionneurs hydrauliques à l'aide de conduits hydrauliques flexibles.

15. Ensemble régulateur de force selon l'une quelconque des revendications précédentes, dans lequel les degrés de liberté dans les ensembles principal et auxiliaire sont reliés à l'aide d'un système hydraulique fermé de cylindres hydrauliques reliés à l'aide de conduits hydrauliques flexibles.
